# EUROPÄISCHE PATENTSCHRIFT

(11) **EP 3 808 668 B1**
(45) Veröffentlichungstag und Bekanntmachung des Hinweises auf die Patenterteilung: **09.02.2022**
(21) Anmeldenummer: 20200197.0
(22) Anmeldetag: 06.10.2020
(51) Int. Cl.: B65B 59/00, B65B 59/04, B65G 21/10, B65G 41/00

(54) **VORRICHTUNG ZUM UMGANG MIT ZU VERPACKENDEN ARTIKELN UND VERFAHREN ZUM ANPASSEN EINER VORRICHTUNG FÜR DEN TRANSPORT VON ZUM VERPACKEN VORGESEHENEN ARTIKELN**
DEVICE FOR HANDLING ITEMS TO BE PACKAGED AND METHOD FOR ADAPTING A DEVICE FOR TRANSPORTING ITEMS FOR PACKAGING
DISPOSITIF DE MANUTENTION D'ARTICLES À EMBALLER ET PROCÉDÉ D'AJUSTEMENT D'UN DISPOSITIF POUR LE TRANSPORT D'ARTICLES DESTINÉS À L'EMBALLAGE

(30) Priorität: 17.10.2019 DE 102019128024
(43) Veröffentlichungstag der Anmeldung: 21.04.2021
(73) Patentinhaber: Krones Aktiengesellschaft, 93073 Neutraubling (DE)
(72) Erfinder: LUBER, Johann, 93073 Neutraubling (DE); SPINDLER, Herbert, 93073 Neutraubling (DE); WERNER, Jürgen, 93073 Neutraubling (DE); WITTMANN, Stephan, 93073 Neutraubling (DE)
(74) Vertreter: Benninger, Johannes

(56) Entgegenhaltungen:
- EP-A1- 3 372 513
- EP-A2- 3 372 514
- WO-A1-2012/062549
- DE-A1-102016 205 255

## Beschreibung

Die vorliegende Erfindung betrifft eine Vorrichtung zum Umgang mit zu verpackenden Artikeln und ein Verfahren zum Anpassen einer Vorrichtung für den Transport von zum Verpacken vorgesehenen Artikeln.

Für eine Verarbeitung, Zusammenstellung, Gruppierung und Verpackung von Artikeln, wie bspw. Getränkebehältern, gibt es unterschiedliche Arten für ihre Verpackung. Derzeit bspw. als Getränkebehälter am häufigsten eingesetzte PET-Behälter weisen relativ geringe Wandstärken auf und sind auch im befüllten Zustand nicht völlig formstabil. Aus diesem Grunde und im Hinblick auf die bessere logistische Handhabbarkeit werden die verschiedensten Verpackungen für gruppierte Einzelbehälter verwendet. So können die Behälter in gruppierter Anordnung bspw. auf einen Kartonbogen gestellt werden, dessen Ränder nach oben gefalzt werden. Derartige Kartonbögen werden in der Praxis auch als sogenanntes Tray bezeichnet.

Auch können Kartonbögen eingesetzt werden, dessen Größe mindestens der Grundfläche einer Gebindeanordnung entspricht und auf welche die einzelnen als Bestandteil eines Gebindes ausgebildeten Behälter bzw. Getränkebehältnisse aufstehen. Derartige Kartonbögen besitzen keine Ränder, die nach oben gefaltet werden, sondern sind auch im fertigen Gebinde plan ausgebildet. In der Praxis werden solche Kartonbögen auch als PAD bezeichnet.

Wahlweise können diese Gebindeanordnungen anschließend mit thermoplastischer Folie umhüllt werden, wobei die thermoplastische Folie mittels eines Erwärmungsprozesses anschließend auf die als Bestandteil eines jeweiligen Gebindes ausgebildeten Getränkebehältnisse geschrumpft wird, um einen stabilen Gebindeverbund zu erhalten, der leicht transportiert und gestapelt werden kann. Eine weitere Gebindevariante wird als "Shrink-only" bezeichnet, da hierbei die zusammengestellten Behälter ohne weiteres Verpackungsmaterial bzw. ohne weitere Kartonbögen mit thermoplastischer Folie umhüllt werden und die thermoplastische Folie nachfolgend auf die jeweiligen zusammengestellten Behälter aufgeschrumpft wird.

Die Formstabilität dieser Gebindevariante wird ausschließlich von der Schrumpffolie gewährleistet. Bekannte Verpackungsmaschinen und deren Fördereinrichtungen sind normalerweise jeweils auf eine bestimmte Art, Größe und/oder Kontur von Fördergütern abgestimmt. Zudem werden für verschiedene Gebinde- und Verpackungsarten jeweils verschiedene Fördereinrichtungen benötigt. Ein Produktwechsel kann unter Umständen dazu führen, dass bestimmte Fördereinrichtungen nicht mehr eingesetzt werden können, da sie bspw. nicht für den Transport von einzelnen Artikeln oder Behältern geeignet sind. Störungen im Transport der Artikel können auch dann auftreten, wenn die Verpackungsmaschinen auf eine jeweils andere Produktvariante eingestellt sind. Solche Förderprobleme können insbesondere bei einem Wechsel zwischen verpackten Gütern wie bspw. Gebindeeinheiten und losen Gütern wie einzelnen Getränkebehältern o. dgl. auftreten. Solche aufrecht stehend zu befördernden Artikel wie Getränkebehälter können auf Fördereinrichtungen, die für den Transport von Gebindeeinheiten vorbereitet sind, leicht kippen und/oder herabfallen, da die Transportmodule möglicherweise keine ausreichend ebenen Unterlagen bieten können, die einen stabilen Transport von Gegenständen mit sehr kleiner Grundfläche ermöglichen.

Um solche Probleme zu vermeiden, sind aus dem Stand der Technik bereits Vorrichtungen bekannt, welche mehrere Module aufweisen, die austauschbar sind bzw. wahlweise in einen bestimmten Abschnitt einer Transportstrecke eingebracht werden können. Eine solche Vorrichtung offenbart beispielsweise die WO 2012/062549 A1. Die in dem Dokument beschriebene Vorrichtung betrifft eine Maschine zur Verarbeitung und/oder Verpackung von Gegenständen mit einer im Wesentlichen horizontalen Transportstrecke zur Förderung von Artikeln, Gebinden und/oder Verpackungseinheiten. Die Maschine umfasst eine erste Horizontalfördereinrichtung mit wenigstens einem Transportmittel für einen ersten Betriebsmodus, welche erste Horizontalfördereinrichtung zur Herstellung mindestens eines weiteren Betriebsmodus durch eine weitere Horizontalfördereinrichtung mit wenigstens einem zum ersten Transportmittel unterschiedlichen zweiten Transportmittel auswechselbar ist.

Die weitere Horizontalfördereinrichtung ist oberhalb der ersten Horizontalfördereinrichtung aufgehängt. Soll die weitere Horizontalfördereinrichtung anstelle der ersten Horizontalfördereinrichtung verwendet werden, so muss die weitere Horizontalfördereinrichtung unter Zuhilfenahme eines Krans abgesenkt und in einen für Artikel vorgesehenen Transportweg eingesetzt werden. Ein solches Einbringen der weiteren Horizontalfördereinrichtung in den Transportweg erfordert eines aufgrund des hierfür notwendigen Absenkens einen komplexen Aufbau der Vorrichtung und ist häufig mit größerem Zeitaufwand verbunden.

Eine Aufgabe der Erfindung kann aus diesem Grunde darin gesehen werden, eine Vorrichtung bereitzustellen, die sich für unterschiedliche Verpackungsarten eignet und auf vereinfachte Art und Weise an eine jeweilige bestimmte für zu verpackende Artikel vorgesehene Verpackungsart angepasst werden kann. Die Vorrichtung soll weiter einen einfachen Aufbau besitzen. Weiter kann eine Aufgabe der Erfindung darin gesehen werden, ein entsprechendes Verfahren bereitzustellen, mit welchem sich eine solche Vorrichtung auf vereinfachte Art und Weise an eine jeweilige bestimmte Verpackungsart anpassen bzw. für eine jeweilige bestimmte Verpackungsart modifizieren lässt. Das Verfahren soll zudem einfach umgesetzt werden können.

Die obigen Aufgaben werden durch eine Vorrichtung und ein Verfahren gelöst, welche die Merkmale in den unabhängigen Ansprüchen umfassen. Weitere vorteilhafte Ausgestaltungen werden durch die Unteransprüche beschrieben.

Die Erfindung betrifft eine Vorrichtung zum Umgang mit zu verpackenden Artikeln. Die Artikel können beispielsweise durch Getränkebehälter ausgebildet sein. Bei den Getränkebehältern kann es sich um Getränkeflaschen bzw. PET-Flaschen und/oder um Getränkedosen und/oder um weitere Getränkebehälter handeln.

Die Vorrichtung umfasst mindestens eine Arbeitsmodul, welches Verpackungen einer ersten Verpackungsart mit hierauf aufgesetzten Artikeln bewegen kann und wenigstens einen Faltmechanismus zum Aufrichten von hinteren und/oder vorderen Laschen besitzt, welche hinteren und/oder vorderen Laschen durch die Verpackungen der ersten Verpackungsart ausgebildet werden.

Die Verpackungen der ersten Verpackungsart können somit durch flächige Verpackungszuschnitte mit hinteren und/oder vorderen Laschen ausgebildet sein, welche über den wenigstens einen Faltmechanismus des mindestens einen Arbeitsmoduls aufgerichtet bzw. in eine aufrechte Orientierung überführt werden können. Solche Verpackungen, wie sie durch Verpackungen der ersten Verpackungsart ausgebildet sein können, werden in der Praxis auch als Trays bezeichnet. Auch können Verpackungen der ersten Verpackungsart durch Umverpackungen ausgebildet sein, welche zusätzlich zu den hinteren und/oder vorderen Laschen jeweils mindestens eine obere Lasche bzw. einen Deckel besitzen, welcher eingeschlagen werden kann, so dass die jeweilige Umverpackung hierdurch geschlossen werden. Das Einschlagen der oberen Lasche bzw. des Deckels kann ggf. mittels eines nachfolgend noch beschriebenen Schließmechanismus erfolgen.

Weiter umfasst die Vorrichtung wenigstens ein Transportmodul, welches ein Transportmittel umfasst, entlang welchen Transportmittels für Verpackungen einer zweiten Verpackungsart vorgesehene Artikel bewegbar sind, welche zweite Verpackungsart sich von der ersten Verpackungsart unterscheidet.

Verpackungen der zweiten Verpackungsart können durch flächige Verpackungszuschnitte ohne einschlagbare Laschen ausgebildet sein. Verpackungen der zweiten Verpackungsart können somit zwei Breitseitenflächen besitzen, wobei eine Breitseitenfläche eine Standfläche für mehrere Artikel bzw. mehrere Getränkebehälter ausbildet. Verpackungen der zweiten Verpackungsart können somit durch sogenannte PADs ausgebildet sein. Auch können Verpackungen der zweiten Verpackungsart beispielsweise durch thermoplastisches Verpackungsmaterial und/oder durch Umreifungen ausgebildet sein. Denkbar ist somit, dass über das Transportmittel des wenigstens einen Transportmoduls Artikel bewegbar sind, ohne dass diese Artikel hierbei auf einem flächigen Verpackungszuschnitt aufstehen. Nachfolgend kann auf die bereits über das Transportmittel bewegten Artikel ein thermoplastischer Verpackungszuschnitt aufgebracht werden. Auch kann es sein, dass über das Transportmittels des wenigstens einen Transportmoduls Artikel bewegbar sind, welche auf einer als PAD ausgebildeten Verpackung der zweiten Verpackungsart aufstehen, welches PAD keine Laschen besitzt, die eingeschlagen werden können bzw. müssen.

Bewährt haben sich Ausführungsformen, bei welchen die Vorrichtung eine Rahmenkonstruktion aufweist, welche Rahmenkonstruktion eine Masse des wenigstens einen Faltmechanismus und/oder eine Masse des Transportmittels zumindest anteilig und vorzugsweise vollständig trägt. Hierbei kann es sein, dass der wenigstens eine Faltmechanismus und/oder das Transportmittel mechanisch an die Rahmenkonstruktion gekoppelt sind.

Es ist vorgesehen, dass der wenigstens eine Faltmechanismus des mindestens einen Arbeitsmoduls und das Transportmittel des wenigstens einen Transportmoduls zwischen einer jeweiligen Betriebsposition und einer jeweiligen Warteposition alternierend hin- und herbewegbar sind, so dass sich entweder der wenigstens eine Faltmechanismus des mindestens einen Arbeitsmoduls oder das Transportmittel des wenigstens einen Transportmoduls in seiner jeweiligen Betriebsposition befindet.

Die Betriebspositionen und die Wartepositionen sind derart ausgebildet, dass der wenigstens eine Faltmechanismus des mindestens einen Arbeitsmoduls ausschließlich rechts- oder linksseitig benachbart zum Transportmittel des wenigstens einen Transportmoduls angeordnet ist. Mittels der Vorrichtung bzw. mittels des in seine Betriebsposition gebrachten Transportmittels oder des in seine Betriebsposition gebrachten wenigstens einen Faltmechanismus können Artikel ggf. jeweils entlang einer horizontalen Transportrichtung bewegt werden. Die Betriebspositionen und die Wartepositionen können somit derart ausgebildet sein, dass der wenigstens eine Faltmechanismus des mindestens einen Arbeitsmoduls im Hinblick auf die horizontale Transportrichtung ausschließlich rechts- oder linksseitig benachbart zum Transportmittel des wenigstens einen Transportmoduls angeordnet ist. Ist das Transportmittel in seine Betriebsposition gebracht, so kann der wenigstens eine Faltmechanismus des mindestens einen Arbeitsmoduls somit ausschließlich rechts- oder linksseitig benachbart zum Transportmittel angeordnet sein. Ist das Transportmittel in seine Warteposition gebracht, so kann der wenigstens eine Faltmechanismus somit weiterhin ausschließlich rechts- oder linksseitig benachbart zum Transportmittel angeordnet sein.

Da der wenigstens eine Faltmechanismus auf lediglich einer Seite bzw. rechts- oder linksseitig benachbart zum Transportmittel angeordnet ist, kann der wenigstens eine Faltmechanismus hierdurch auch einfach gewartet oder repariert werden, sofern sich das Transportmittel in seiner Betriebsposition befindet.

Es kann sein, dass das Transportmittel eine Standfläche bereitstellt, entlang welcher Standfläche Artikel, welche für Verpackungen der zweiten Verpackungsart vorgesehen sind, gleitend bewegt werden können. Die Standfläche und die Betriebsposition des Transportmittels können derart ausgebildet sein, dass die Standfläche eine horizontale Orientierung besitzt, sofern sich das Transportmittel in seiner Betriebsposition befindet bzw. sofern das Transportmittel in seine Betriebsposition überführt wurde. Die Vorrichtung kann zudem mehrere Schubstangen umfassen, welche mit Artikeln in Oberflächenkontakt treten und die jeweiligen Artikel über die Standfläche schieben können, sofern sich das Transportmittel in seiner Betriebsposition befindet bzw. sofern das Transportmittel in seine Betriebsposition überführt wurde. Bewährt hat es sich, wenn die Vorrichtung einen Ketten- und/oder Riementrieb umfasst, an welchem mehrere Schubstangen angeordnet sind, welche mit Artikeln in Oberflächenkontakt treten und die jeweiligen Artikel unter Oberflächenkontakt über die Standfläche gleitend schieben können, sofern sich das Transportmittel in seiner Betriebsposition befindet bzw. sofern das Transportmittel in seine Betriebsposition überführt wurde.

Es ist denkbar, dass die Schubstangen für einen Betriebsmodus, in dem sie nicht benötigt werden, oder zur Umstellung auf einen anderen Betriebsmodus, lösbar an den Ketten oder Riemen eines Ketten- und/oder Riementriebs angeordnet sind. Alternativ könnte der Ketten- und/oder Riementrieb (inklusive Schubstangen) analog zur EP 3 372 513 B1 in eine passive Position mittels eines weiteren Antriebs oder von Hand verstellt werden, beispielsweise nach oben (also weg vom Erdmittelpunkt).

Weiter kann das Transportmittel als umlaufend angetriebener Bestandteil einer Horizontalfördereinrichtung des wenigstens einen Transportmoduls ausgebildet sein.

Somit kann es sein, dass das Transportmittel als Fördergurt einer Horizontalfördereinrichtung des wenigstens einen Transportmoduls ausgebildet ist. Das Transportmittel kann somit als endlos umlaufendes Fördertrum einer Horizontalfördereinrichtung des wenigstens einen Transportmoduls ausgebildet sein.

Denkbar ist, dass das Transportmittel des wenigstens einen Transportmoduls mit einer vorzugsweise durch einen Gelenkmechanismus ausgebildeten Drehachse in Verbindung steht, über welche vorzugsweise durch einen Gelenkmechanismus ausgebildete Drehachse das Transportmittel aus seiner Betriebsposition in seine Warteposition und aus seiner Warteposition in seine Betriebsposition schwenkbar ist. Es kann sein, dass die Vorrichtung mindestens einen Aktor umfasst, welcher das Transportmittel aus seiner Betriebsposition in seine Warteposition und aus seiner Warteposition in seine Betriebsposition schwenken kann. Der mindestens eine Aktor kann mit einer Steuer- und/oder Regeleinrichtung in Verbindung stehen, über welche ein Benutzer ein jeweiliges Schwenken des Transportmittels aus seiner Betriebsposition in seine Warteposition und aus seiner Warteposition in seine Betriebsposition jeweils vorgeben bzw. jeweils veranlassen kann.

Alternativ oder ergänzend hierzu kann es sein, dass der wenigstens eine Faltmechanismus mit einer vorzugsweise durch einen Gelenkmechanismus ausgebildeten Drehachse in Verbindung steht, über welche vorzugsweise durch einen Gelenkmechanismus ausgebildete Drehachse der wenigstens eine Faltmechanismus aus seiner Betriebsposition in seine Warteposition und aus seiner Warteposition in seine Betriebsposition schwenkbar ist. Es kann sein, dass die Vorrichtung wenigstens einen Aktor umfasst, welcher den wenigstens einen Faltmechanismus aus seiner Betriebsposition in seine Warteposition und aus seiner Warteposition in seine Betriebsposition schwenken kann. Der wenigstens eine Aktor kann mit einer Steuer- und/oder Regeleinrichtung in Verbindung stehen, über welche ein Benutzer in jeweiliges Schwenken des wenigstens einen Faltmechanismus aus seiner Betriebsposition in seine Warteposition und aus seiner Warteposition in seine Betriebsposition jeweils vorgeben bzw. jeweils veranlassen kann.

Es haben sich Ausführungsformen bewährt, bei welchen die Vorrichtung eine Steuer- und/oder Regeleinrichtung sowie mindestens einen Aktor umfasst, welcher mit der Steuer- und/oder Regeleinrichtung in Verbindung steht. Die Steuer- und/oder Regeleinrichtung kann derart ausgebildet sein, dass die Steuer- und/oder Regeleinrichtung die alternierende Bewegung für den wenigstens einen Faltmechanismus und das Transportmittel über den mindestens einen Aktor selbständig bewirken kann.

Bewährt haben sich Ausführungsformen, bei welchen das Transportmittel des wenigstens einen Transportmoduls mit einer vorzugsweise durch einen Gelenkmechanismus ausgebildeten ersten Drehachse in Verbindung steht, über welche vorzugsweise durch einen Gelenkmechanismus ausgebildete erste Drehachse das Transportmittel aus seiner Betriebsposition in seine Warteposition und aus seiner Warteposition in seine Betriebsposition schwenkbar ist. Ergänzend hierzu kann es sein, dass der wenigstens eine Faltmechanismus mit einer vorzugsweise durch einen Gelenkmechanismus ausgebildeten weiteren Drehachse in Verbindung steht, über welche vorzugsweise durch einen Gelenkmechanismus ausgebildete weitere Drehachse der wenigstens eine Faltmechanismus aus seiner Betriebsposition in seine Warteposition und aus seiner Warteposition in seine Betriebsposition schwenkbar ist. Hierbei kann es sein, dass die vorzugsweise durch einen Gelenkmechanismus ausgebildete erste Drehachse und die vorzugsweise durch einen Gelenkmechanismus ausgebildete weitere Drehachse zueinander beabstandet angeordnet sind.

Auch können die vorzugsweise durch einen Gelenkmechanismus ausgebildete erste Drehachse und die vorzugsweise durch einen Gelenkmechanismus ausgebildete weitere Drehachse parallel zueinander verlaufen. Es kann hierbei sein, dass die vorzugsweise durch einen Gelenkmechanismus ausgebildete erste Drehachse und die vorzugsweise durch einen Gelenkmechanismus ausgebildete weitere Drehachse parallel zueinander und parallel zu der vorherig bereits erwähnten und für Artikel vorgesehenen Transportrichtung verlaufen.

Auch kann es sein, dass das mindestens eine Arbeitsmodul eine Linearführung umfasst, über welche Linearführung der wenigstens eine Faltmechanismus in horizontaler Richtung aus seiner Betriebsposition in seine Warteposition und aus seiner Warteposition in seine Betriebsposition bewegbar ist. Über die Linearführung kann der wenigstens eine Faltmechanismus ggf. an der vorherig bereits erwähnten Rahmenkonstruktion befestigt sein. Weiter kann das wenigstens eine Transportmodul eine Linearführung umfassen, über welche Linearführung das Transportmittel in horizontaler Richtung aus seiner Betriebsposition in seine Warteposition und aus seiner Warteposition in seine Betriebsposition bewegbar ist. Auch das Transportmittel kann ggf. über eine Linearführung an der vorherig bereits erwähnten Rahmenkonstruktion befestigt sein.

Weiter kann das Transportmittel des wenigstens einen Transportmoduls an den wenigstens einen Faltmechanismus des mindestens einen Arbeitsmoduls mechanisch gekoppelt sein, so dass das Transportmittel des wenigstens einen Transportmoduls bei einer Bewegung des wenigstens einen Faltmechanismus aus seiner Betriebsposition in seine Warteposition und aus seiner Warteposition in seine Betriebsposition gemeinsam mit dem wenigstens einen Faltmechanismus jeweils mitbewegt wird. Denkbar ist hierbei, dass das Transportmittel über die bereits beschriebene Drehachse bzw. erste Drehachse, welche vorzugsweise durch einen Gelenkmechanismus ausgebildet wird, an den wenigstens einen Faltmechanismus des mindestens einen Arbeitsmoduls mechanisch gekoppelt ist. Die mechanische Koppelung kann derart ausgebildet sein, dass der wenigstens eine Faltmechanismus bei einer Bewegung aus seiner Betriebsposition in seine Warteposition das Transportmittel in seine Betriebsposition zieht und hierbei verschwenkt.

Die Vorrichtung kann mindestens einen Schließmechanismus zum Falten bzw. zum Einschlagen von oberen Laschen, welche oberen Laschen durch die Verpackungen der ersten Verpackungsart ausgebildet werden, umfassen. Es kann sein, dass der mindestens eine Schließmechanismus zwischen einer Betriebsposition und einer Warteposition alternierend hin und her bewegbar ist, so dass der mindestens eine Schließmechanismus und der wenigstens eine Faltmechanismus gemeinsam ihre jeweilige Betriebsposition und ihre jeweilige Warteposition einnehmen können. Weiter kann es sein, dass die Betriebspositionen und die Wartepositionen des wenigstens einen Faltmechanismus und des Transportmittels derart ausgebildet sind, dass der mindestens eine Schließmechanismus ausschließlich oberhalb des wenigstens einen Faltmechanismus und ausschließlich oberhalb des Transportmittels angeordnet ist. Bewährt hat es sich, wenn der mindestens eine Schließmechanismus durch eine jeweilige Bewegung in vertikaler Richtung zwischen seiner Betriebsposition und seiner Warteposition alternierend wechseln kann.

Weiter betrifft die Erfindung ein Verfahren zum Anpassen einer Vorrichtung für den Transport von zum Verpacken vorgesehenen Artikeln an eine jeweilige für die Artikel vorgesehene Verpackungsart. Merkmale, welche vorhergehend bereits zu diversen Ausführungsformen der Vorrichtung genannt wurden können ebenso bei diversen Ausführungsformen des nachfolgend beschriebenen Verfahrens vorgesehen sein und werden nicht mehrfach erwähnt. Ebenso können Merkmale, welche zu diversen Ausführungsformen des nachfolgenden Verfahrens beschrieben werden, bei diversen Ausführungsformen der vorhergehend bereits beschriebenen Vorrichtung vorgesehen sein.

Für das Verfahren ist mindestens ein Arbeitsmodul vorgesehen, das Verpackungen einer ersten Verpackungsart mit hierauf aufgesetzten Artikeln bewegen kann und wenigstens einen Faltmechanismus zum Aufrichten von hinteren und/oder vorderen Laschen besitzt, welche hinteren und/oder vorderen Laschen die Verpackungen der ersten Verpackungsart ausbilden. Weiter ist für das Verfahren wenigstens ein Transportmodul vorgesehen, das ein Transportmittel umfasst, entlang welchen Transportmittels für Verpackungen einer zweiten Verpackungsart vorgesehene Artikel bewegbar sind, welche zweite Verpackungsart sich von der ersten Verpackungsart unterscheidet.

Im Rahmen des Verfahrens werden der wenigstens eine Faltmechanismus und das Transportmittel zwischen einer jeweiligen Betriebsposition und einer jeweiligen Warteposition alternierend hin- und herbewegt, so dass sich entweder der wenigstens eine Faltmechanismus des mindestens einen Arbeitsmoduls oder das Transportmittel des wenigstens einen Transportmoduls in seiner jeweiligen Betriebsposition befindet.

Es ist vorgesehen, dass die alternierende Bewegung zwischen der jeweiligen Betriebsposition und der jeweiligen Warteposition durchgeführt werden, so dass der wenigstens eine Faltmechanismus zeitlich während und nach einem Beenden einer alternierenden Bewegung ausschließlich rechts- oder linksseitig benachbart gegenüber dem Transportmittel des wenigstens einen Transportmoduls angeordnet ist.

Es kann sein, dass das Transportmittel in der Betriebsposition umlaufend angetrieben wird und hierbei für Verpackungen einer zweiten Verpackungsart vorgesehene Artikel bewegt und/oder dass über das Transportmittel in der Betriebsposition für Verpackungen einer zweiten Verpackungsart vorgesehene Artikel gleitend hinwegbewegt werden. Das Transportmittel kann somit ggf. als Fördertrum einer Horizontalfördereinrichtung des Transportmoduls ausgebildet sein. Auch kann das für das Verfahren vorgesehene Transportmittel eine Standfläche bereitstellen, entlang welcher Standfläche Artikel, welche für Verpackungen der zweiten Verpackungsart vorgesehene sind, gleitend bewegt werden, sofern sich das Transportmittel in seiner Betriebsposition befindet bzw. zeitlich nachdem das Transportmittel aus seiner Warteposition in seine Betriebsposition überführt wurde.

Vorstellbar ist, dass das Transportmittel des wenigstens einen Transportmoduls über eine vorzugsweise durch einen Gelenkmechanismus ausgebildete Drehachse in seine Betriebsposition geschwenkt wird und über eine vorzugsweise durch einen Gelenkmechanismus ausgebildete Drehachse aus seiner Betriebsposition in seine Warteposition zurückgeschwenkt wird. Alternativ oder ergänzend hierzu kann es sein, dass der wenigstens eine Faltmechanismus über eine vorzugsweise durch einen Gelenkmechanismus ausgebildete Drehachse in seine Betriebsposition geschwenkt wird und über eine vorzugsweise durch einen Gelenkmechanismus ausgebildete Drehachse aus seiner Betriebsposition in seine Warteposition zurückgeschwenkt wird.

Denkbar ist, dass das Transportmittel des wenigstens einen Transportmoduls über eine vorzugsweise durch einen Gelenkmechanismus ausgebildete Drehachse aktorisch in seine Betriebsposition geschwenkt wird und über eine vorzugsweise durch einen Gelenkmechanismus ausgebildete Drehachse aktorisch aus seiner Betriebsposition in seine Warteposition zurückgeschwenkt wird. Alternativ oder ergänzend hierzu kann es sein, dass der wenigstens eine Faltmechanismus über eine vorzugsweise durch einen Gelenkmechanismus ausgebildete Drehachse aktorisch in seine Betriebsposition geschwenkt wird und über eine vorzugsweise durch einen Gelenkmechanismus ausgebildete Drehachse aktorisch aus seiner Betriebsposition in seine Warteposition zurückgeschwenkt wird.

Bewährt hat es sich, wenn das wenigstens eine Transportmodul über eine vorzugsweise durch einen Gelenkmechanismus ausgebildete erste Drehachse in seine Betriebsposition geschwenkt wird und über die vorzugsweise durch einen Gelenkmechanismus ausgebildete erste Drehachse aus seiner Betriebsposition in seine Warteposition zurückgeschwenkt wird. Zudem kann der wenigstens eine Faltmechanismus über eine vorzugsweise durch einen Gelenkmechanismus ausgebildete weitere Drehachse aus seiner Warteposition in seine Betriebsposition geschwenkt werden und über die vorzugsweise durch einen Gelenkmechanismus ausgebildete weitere Drehachse aus seiner Betriebsposition in seine Warteposition zurückgeschwenkt werden. Die vorzugsweise durch einen Gelenkmechanismus ausgebildete erste Drehachse und die vorzugsweise durch einen Gelenkmechanismus ausgebildete weitere Drehachse können beabstandet zueinander angeordnet sein. Bewährt hat es sich, wenn die vorzugsweise durch einen Gelenkmechanismus ausgebildete erste Drehachse und die vorzugsweise durch einen Gelenkmechanismus ausgebildete weitere Drehachse parallel zueinander verlaufen.

Auch kann im Rahmen des alternierenden Hin- und Herbewegens der wenigstens eine Faltmechanismus ggf. über eine Linearführung in horizontaler Richtung aus seiner Betriebsposition in seine Warteposition und aus seiner Warteposition in seine Betriebsposition bewegt werden.

Für das Verfahren kann mindestens ein Schließmechanismus zum Falten von oberen Laschen vorgesehen sein, welche oberen Laschen durch die Verpackungen der ersten Verpackungsart ausgebildet werden. Hierbei kann es sein, dass der mindestens eine Schließmechanismus zwischen einer Betriebsposition und einer Warteposition alternierend hin- und herbewegt wird, so dass der mindestens eine Schließmechanismus und der wenigstens eine Faltmechanismus zeitgleich ihre jeweilige Warteposition einnehmen. Die alternierende Bewegung für den mindestens einen Schließmechanismus kann hierbei derart durchgeführt werden, dass sich der mindestens eine Schließmechanismus zeitlich während und zeitlich nach einem Beenden einer alternierenden Bewegung ausschließlich oberhalb des Transportmittels und ausschließlich oberhalb des wenigstens einen Faltmechanismus befindet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Verpackungsanlage 50, bei welcher die Ausführungsformen der in den nachfolgenden Figuren 2 bis 7 dargestellten Vorrichtungen 1 Verwendung finden können bzw. bei welcher die Schritte des Verfahrens 100 gemäß der Ausführungsform nach Figur 8 umgesetzt werden können;
Figuren 2 bis 4 zeigen schematische Ansichten einer erste Ausführungsform einer erfindungsgemäßen Vorrichtung und verdeutlichen einzelne Schritte, wie sie bei diversen Ausführungsformen des erfindungsgemäßen Verfahrens vorgesehen sein können;
Figur 5 zeigt eine schematische Ansicht einer zweiten Ausführungsform einer erfindungsgemäßen Vorrichtung und verdeutlicht einzelne Schritte, wie sie bei diversen Ausführungsformen des erfindungsgemäßen Verfahrens vorgesehen sein können;
Figuren 6a und 6b zeigen eine schematische Ansicht einer dritten Ausführungsform einer erfindungsgemäßen Vorrichtung und verdeutlichen einzelne Schritte, wie sie bei diversen Ausführungsformen des erfindungsgemäßen Verfahrens vorgesehen sein können;
Figuren 7a und 7b zeigen eine schematische Ansicht einer vierten Ausführungsform einer erfindungsgemäßen Vorrichtung und verdeutlichen einzelne Schritte, wie sie bei diversen Ausführungsformen des erfindungsgemäßen Verfahrens vorgesehen sein können;
Figur 8 zeigt im Flussdiagramm Schritte, wie sie einzeln oder in der gemäß Figur 8 dargestellten Kombination bzw. Reihenfolge bei diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

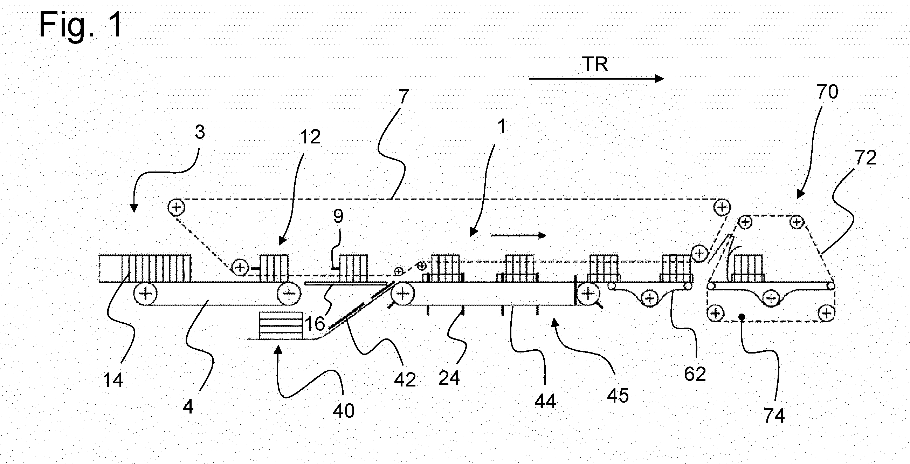

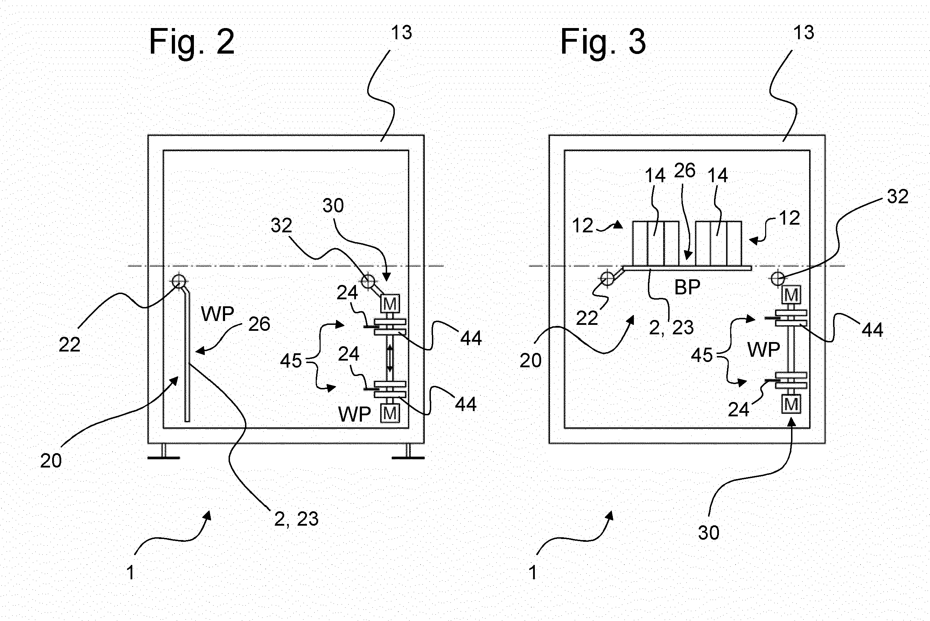

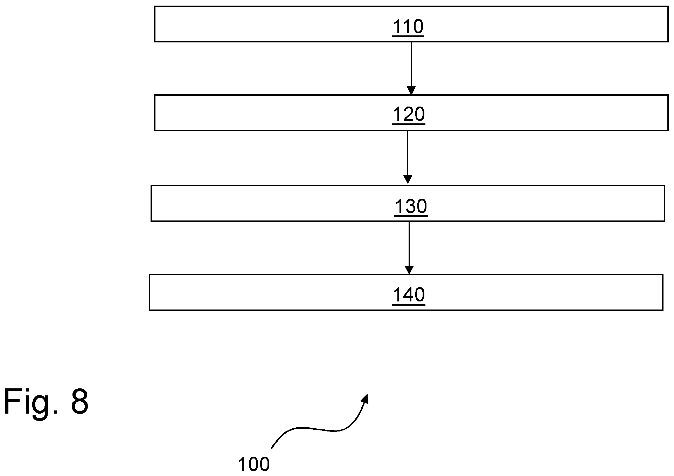

Figur 1 zeigt eine schematische Ansicht einer Verpackungsanlage 50, bei welcher die Ausführungsformen der in den nachfolgenden Figuren 2 bis 7 dargestellten Vorrichtungen 1 Verwendung finden können bzw. bei welcher die Schritte des Verfahrens 100 gemäß der Ausführungsform nach Figur 8 umgesetzt werden können.

Die Verpackungsanlage 50 umfasst einen Zulauf 3 mit einem Transportband 4, auf welchem eine Vielzahl an Getränkebehältern 14, die in Figur 1 lediglich schematisch dargestellt sind, hintereinander in Transportrichtung TR bewegt werden. Bei den Getränkebehältern 14 kann es sich beispielsweise um Getränkeflaschen bzw. PET-Getränkeflaschen und/oder um Getränkedosen handeln.

An einem Ketten- und/oder Riementrieb 7 sind mehrere Schubstangen 9 angeordnet, die über den Ketten- und/oder Riementrieb 7 umlaufend bewegt werden. Um mehrere Getränkebehälter 14 gemeinsam zu verpacken, tritt eine jeweilige Schubstange 9 rückseitig mit mindestens einem Getränkebehälter 14 in Oberflächenkontakt, beschleunigt diesen mindestens einen Getränkebehälter 14 gegenüber einer Transportgeschwindigkeit des Transportbandes 4 und schiebt diesen mindestens einen Getränkebehälter 14 hierdurch zusammen mit weiteren vorauseilenden Getränkebehältern 14 auf die Überschubplatte 16. Hierdurch werden entlang der Überschubplatte 16 Zusammenstellungen 12 an Getränkebehältern 14 gleitend mittels des jeweiligen Schubbalkens 9 geschoben, welche Zusammenstellungen 12 an Getränkebehältern 14 zu einem späteren Zeitpunkt gemeinsam verpackt werden bzw. zu einem mehrere Getränkebehälter 14 umfassenden Gebinde miteinander verbunden werden.

Figur 1 lässt zudem erkennen, dass sich unterhalb einer für die Getränkebehälter 14 vorgesehenen Transportebene ein Vorrat 40 an flächigen Verpackungszuschnitten 42 befindet. Die flächigen Verpackungszuschnitte 42 sind im Vorrat 40 in gestapelter Form angeordnet. Weiter handelt es sich bei den flächigen Verpackungszuschnitten 42 um sogenannte Trays, welche seitliche, vordere und hintere Laschen besitzen, die in Richtung nach oben gefaltet werden können und in einer jeweiligen nach oben gefalteten Orientierung eine Umverpackung für eine jeweilige Zusammenstellung 12 an Getränkebehältern 14 ausbilden. Das Falten der Laschen wird durch eine Vorrichtung bewirkt, wie sie in Figur 1 auf Verweis mit Ziffer 1 dargestellt ist und beispielsweise gemäß einem Ausführungsbeispiel der nachfolgenden Figuren 2 bis 7 ausgebildet sein kann.

Figur 1 zeigt, dass die flächigen Verpackungszuschnitte 42 aus dem Vorrat 40 entnommen werden und hierauf folgend über einen Spalt, welcher zwischen der Überschubplatte 16 und der Vorrichtung 1 ausgebildet ist, in einen Transportweg der Getränkebehälter 14 eingebracht werden. Eine jeweilige Zusammenstellung 12 an Getränkebehältern 14 fährt im Bereich des Spaltes auf einen jeweiligen flächigen Verpackungszuschnitt 42 auf, so dass sich eine jeweilige Zusammenstellung 12 an Getränkebehältern 14 im Bereich der Vorrichtung 1 auf einem jeweiligen flächigen Verpackungszuschnitt 42 befindet.

Um die vorherig bereits erwähnten Laschen des flächigen Verpackungszuschnittes 42 aufzurichten, umfasst die Vorrichtung 1 einen Faltmechanismus 45. Der Faltmechanismus 45 besitzt zwei parallel zueinander verlaufende Ketten- und/oder Riementriebe 44, von welchen in Figur 1 ein Ketten- und/oder Riementrieb 44 zu erkennen ist. Ein weiterer Ketten- und/oder Riementrieb 44 ist in Richtung der Bildebene hinter dem Ketten- und/oder Riementrieb 44 angeordnet. Über jeden Ketten- und/oder Riementrieb 44 werden mehrere Faltfinger 24 umlaufend bewegt. So nehmen die Ketten- und/oder Riementriebe 44 einen jeweiligen flächigen Verpackungszuschnitte 42 mit der hierauf aufgefahrenen Zusammenstellung 12 an Getränkebehältern 14 entgegen, bewegen den jeweiligen flächigen Verpackungszuschnitt 42 in Transportrichtung TR und richten über die Faltfinger 24 Laschen des jeweiligen flächigen Verpackungszuschnittes 42 auf. Vorherig kann ein Haft- und/oder Klebemittelauftrag auf die jeweiligen Laschen eines Verpackungszuschnittes 42 aufgebracht werden, so dass die Laschen nach dem Aufrichten miteinander verklebt sind und in ihrer aufgerichteten Orientierung verbleiben. Während der fortlaufenden Bewegung mittels der Vorrichtung 1 in Transportrichtung TR kann der jeweilige Haft- und/oder Klebemittelauftrag zumindest teilweise aushärten.

Auf die Vorrichtung 1 folgt in Transportrichtung TR ein Auslaufband 62, welches die Verpackungszuschnitte 42 mit den weiterhin aufgerichteten Laschen von der Vorrichtung 1 entgegennimmt und in Richtung eines Einschlagmoduls 70 bewegt. Auch das Einschlagmodul 70 verfügt über einen umlaufenden Ketten- und/oder Riementrieb 72. Am Ketten- und/oder Riementrieb 72 des Einschlagmoduls 70 sind mehrere Einschlagstäbe 74 angeordnet, welche Zuschnitte aus thermoplastischem Verpackungsmaterial auf die Zusammenstellungen 12 an Getränkebehältern 14 aufbringen. Zusammen mit den Zuschnitten aus thermoplastischem Verpackungsmaterial sowie zusammen mit dem flächigen Verpackungszuschnitte 42 bzw. mit dem jeweiligen Tray, auf welchen die Zusammenstellungen 12 an Getränkebehältern 14 weiterhin aufstehen, werden die Zusammenstellungen 12 an Getränkebehältern 14 sodann einem Schrumpftunnel zugeführt, welcher in den Figuren der vorliegenden Patentanmeldung nicht mit dargestellt ist und worin die Zuschnitte aus thermoplastischem Verpackungsmaterial auf die Zusammenstellungen 12 an Getränkebehältern 14 aufgeschrumpft werden. Sofern kein thermoplastisches Verpackungsmaterial auf Zusammenstellungen 12 an Getränkebehältern 14 aufgeschrumpft werden soll, kann auf das Einschlagmodul 70 verzichtet werden, so dass das Einschlagmodul 70 einen optionalen Bestandteil der Verpackungsanlage 50 darstellt.

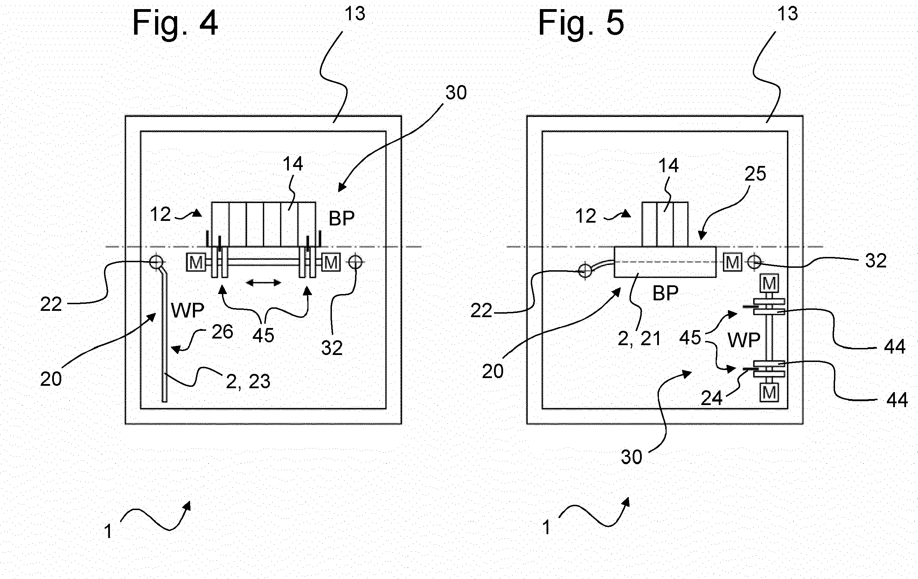

Sofern Zusammenstellungen 12 an Getränkebehältern 14 mit Verpackungen einer zweiten Verpackungsart versehen werden sollen, welche Verpackungen der zweiten Verpackungsart keine Laschen besitzen, die in Richtung nach oben gefaltet werden sollen bzw. müssen, eignen sich die Ketten- und/oder Riementriebe 44 der Vorrichtung 1 nicht, um die jeweiligen Zusammenstellungen 12 an Getränkebehältern 14 entlang eines zwischen dem weiteren Transportband 62 und der Überschubplatte 16 ausgebildeten Transportweges fortzubewegen. In der Praxis werden bis dato die Ketten- und/oder Riementriebe 44 auseinanderbewegt, wodurch der relative Abstand zwischen den Ketten- und/oder Riementrieben 44 vergrößert wird. In einen Freiraum, welcher hierdurch zwischen den Ketten- und/oder Riementrieben 44 entsteht, kann sodann eine Horizontalfördereinrichtung oder ein weiteres Transportmittel eingesetzt werden, um Zusammenstellungen 12 an Getränkebehältern 14, welche für die jeweilige Verpackung einer zweiten bzw. weiteren Verpackungsart vorgesehen sind, in Transportrichtung TR anstelle der Ketten- und/oder Riementriebe 44 fortzubewegen. Häufig wird die Horizontalfördereinrichtung hierzu oberhalb einer Transportebene für Artikel aufgehängt und sodann unter Zuhilfenahme eines Portalkrans abgesenkt bzw. unter Zuhilfenahme eines Portalkrans in den zwischen benachbarten Ketten- und/oder Riementrieben 44 gebildeten Freiraum eingebracht. Es hat sich gezeigt, dass eine solche Anpassung der Vorrichtung 1 mit einem hohen Zeitaufwand verbunden ist und dass eine solche Anpassung der Vorrichtung 1 einen komplexen Aufbau erfordert. Bei der Vorrichtung 1 ist daher vorgesehen, dass der Faltmechanismus 45 ausschließlich rechts- oder linksseitig gegenüber dem Transportmittel angeordnet ist, welches in Figur 1 nicht mit dargestellt wird. Dieses Transportmittel kann, wie bereits erwähnt und in den nachfolgenden Figuren 2 bis 7 jeweils noch erläutert, beispielsweise als Horizontalfördereinrichtung 25 bzw. umlaufendes Fördertrum 21 einer Horizontalfördereinrichtung 25 (vgl. Figur 5) ausgebildet sein. Eine Anordnung, bei welcher sich der Faltmechanismus 45 ausschließlich rechts- oder linksseitig des in den nachfolgenden Figuren auf Verweis mit Ziffer 2 dargestellten Transportmittels befindet, eignet sich darüber hinaus, um den Faltmechanismus 45 für eine Wartung oder Instandsetzung zugänglich zu halten.

Es soll nicht unerwähnt bleiben, dass diverse Gebinde bzw. Multipacks keinen flächigen und ggf. durch ein Tray oder PAD ausgebildeten Verpackungszuschnitt besitzen, auf welchem die jeweiligen Getränkebehälter aufstehen. Bei solchen Gebinden bzw. Multipacks können die Getränkebehälter 14 beispielsweise ausschließlich mittels einer Umreifung oder ausschließlich durch thermoplastisches Verpackungsmaterial zusammengefasst sein. Sollen die Getränkebehälter zum Verpacken über einen im Bereich der Vorrichtung 1 ausgebildeten Verbringungsweg bewegt werden, so eignen sich auch hierzu die in Figur 1 dargestellten Ketten- und/oder Riementriebe 44 nicht, um Getränkebehälter 14 oder Zusammenstellungen 12 an Getränkebehältern 14 zu transportieren. Um einen Transport für solche Getränkebehälter 14 zu ermöglichen, wird auch hierzu entsprechend der Beschreibung zu den nachfolgenden Figuren 2 bis 7 jeweils ein Transportmittel 2 anstelle der Ketten- und/oder Riementriebe 44 bzw. anstelle des Faltmechanismus 45 in den Transportweg der Getränkebehälter 14 eingebracht, welches Transportmittel 2 beispielsweise durch eine Horizontalfördereinrichtung 25 oder auch eine Platte 23 ausgebildet sein kann. Der Faltmechanismus 45 ist hierbei weiterhin ausschließlich rechts- oder linksseitig gegenüber dem Transportmittel 2 angeordnet.

Figuren 2 bis 4 zeigen schematische Ansichten einer erste Ausführungsform einer erfindungsgemäßen Vorrichtung 1 und verdeutlichen einzelne Schritte, wie sie bei diversen Ausführungsformen des erfindungsgemäßen Verfahrens 100 vorgesehen sein können. Die Vorrichtung 1 ist als Modul ausgebildet, welches in einer Verpackungsanlage 50 entsprechend dem Ausführungsbeispiel nach Figur 1 oder auch in weiteren Ausführungsformen einer Verpackungsanlage installiert werden kann.

Die Vorrichtung 1 umfasst eine Rahmenkonstruktion 13, innerhalb welcher ein Transportmodul 20 und ein Arbeitsmodul 30 vollständig aufgenommen sind. Eine Masse des Transportmoduls 20 und eine Masse des Arbeitsmoduls 30 werden von der Rahmenkonstruktion 13 vollständig getragen.

Sofern Zusammenstellungen 12 an Getränkebehältern 14 (vgl. Figur 1) über die Vorrichtung 1 bewegt werden sollen, kann hierzu in Abhängigkeit der jeweiligen Verpackungsart der jeweiligen für die Getränkebehälter 14 vorgesehenen Verpackung wahlweise das Transportmodul 20 oder das Arbeitsmodul 30 verwendet werden. Das Transportmodul 20 umfasst in Figur 2 ein Transportmittel 2, welches als Platte 23 ausgebildet ist und über welches Zusammenstellungen 12 an Getränkebehältern 14 gleitend bewegbar sind, sofern sich die Platte 23 in einer Betriebsposition BP (vgl. Figur 3) befindet. In Figur 2 befindet sich das Transportmittel 2 bzw. die Platte 23 in einer Warteposition WP. Zur gleitenden Bewegung der Zusammenstellungen 12 an Getränkebehältern 14 stellt die Platte 23 eine Standfläche bereit, auf welche in Figur 2 mit Ziffer 26 verwiesen wird.

Das Arbeitsmodul 30 umfasst einen Faltmechanismus 45 mit Ketten- und/oder Riementrieben 44, welche jeweils eine Vielzahl an Faltfingern 24 umlaufend bewegen. In Figur 2 befindet sich der Faltmechanismus 45 in einer Warteposition WP. Ist der Faltmechanismus 45 des Arbeitsmoduls 30 in eine Betriebsposition BP gebracht, wie es in Figur 4 dargestellt ist, so kann das Arbeitsmodul 30 mittels der umlaufend bewegten Vielzahl an Faltfingern 24 Laschen an flächigen Verpackungszuschnitten 42 (vgl. Figur 1) in Richtung nach oben aufrichten sowie die flächigen Verpackungszuschnitte 42 zusammen mit hierauf aufstehenden Getränkebehältern 14 in einer Transportrichtung TR bewegen, welche in Figur 2 in Richtung der Bildebene weist.

Das Arbeitsmodul 30 ist somit dazu geeignet, Zusammenstellungen 12 an Getränkebehältern 14 zu bewegen und hierbei Laschen von flächigen Verpackungszuschnitten 42 aufzurichten bzw. in eine aufrechte Orientierung zu überführen.

Das Transportmodul 20 ist somit dazu geeignet, Zusammenstellungen 12 an Getränkebehältern 14 ohne eine entsprechende Umverpackung zu bewegen, deren Laschen aufgerichtet werden müssen bzw. sollen. Über das Transportmodul 20 können somit Zusammenstellungen 12 an Getränkebehältern 14 bewegt werden, welche auf einem sogenannten PAD aufstehen. Ein PAD kann als flächiger Verpackungszuschnitt ausgebildet sein, welcher keine Laschen besitzt, die in eine aufrechte Orientierung überführt werden können. Ein solches PAD kann zwei auf gegenüberliegenden Seiten angeordnete Breitseitenflächen besitzen, wobei eine in Richtung nach oben orientierte Breitseitenfläche zum Aufsetzen bzw. Aufstellen von Zusammenstellungen 12 an Getränkebehältern 14 vorbestimmt ist. Ein PAD kann durch Karton und/oder Pappe ausgebildet sein. Auch können über das Transportmodul 20 Getränkebehälter 14 bewegt werden, welche auf keinem flächigen Verpackungszuschnitt aufstehen bzw. auf welche zu einem späteren Zeitpunkt thermoplastisches Verpackungsmaterial aufgeschrumpft werden soll, um diese Getränkebehälter 14 zu einem Gebinde zusammenzufassen.

Sofern zunächst mittels der Vorrichtung 1 flächige Verpackungszuschnitte 42 bewegt werden, deren Laschen über die Faltfinger 24 in eine aufrechte Orientierung überführt werden und sofern zeitlich hierauf folgend über die Vorrichtung 1 Zusammenstellungen 12 an Getränkebehältern 14 bewegt werden sollen, für welche kein solcher flächiger Verpackungszuschnitt vorgesehen ist, ist das Transportmittel 2 bzw. die Platte 23 aus der in Figur 2 dargestellten Warteposition WP in eine Betriebsposition BP zu überführen. Das Transportmodul 20 umfasst hierzu einen Gelenkmechanismus 22, mit welchem das Transportmittel 2 bzw. die Platte 23 in Verbindung steht. Über den Gelenkmechanismus 22 kann das Transportmittel 2 bzw. die Platte 23 um eine Achse gedreht werden, welche parallel zu der für die Getränkebehälter 14 vorgesehenen Transportrichtung TR weist (vgl. Figur 1), wodurch das Transportmittel 2 bzw. die Platte 23 aus der in Figur 2 dargestellten Warteposition WP in die nach Figur 3 dargestellte Betriebsposition BP gelangt. Das Drehen kann manuell oder über einen in den Figuren der vorliegenden Patentanmeldung nicht dargestellten Aktor erfolgen.

Figur 3 zeigt hierbei, dass die Standfläche 26, welche über die in die Betriebsposition BP gebrachte Platte 23 ausgebildet wird, eine horizontale Orientierung aufweist. Wie zu Figur 1 bereits beschrieben, können über einen Ketten- und/oder Riementrieb 7 Schubstangen 9 umlaufend bewegt werden, welche rückseitig mit mindestens einem Getränkebehälter 14 einer jeweiligen Zusammenstellung 12 in Oberflächenkontakt treten und die jeweilige Zusammenstellung 12 gleitend über die Standfläche 26 der in die Betriebsposition BP gebrachten Platte 23 schieben.

Sollen zu einem späteren Zeitpunkt Zusammenstellungen 12 an Getränkebehältern 14 über die Vorrichtung 1 bewegt werden und Laschen, welche für die Zusammenstellungen 12 vorgesehene Verpackungen besitzen, hierbei in Richtung nach oben gefaltet werden, so wird die Platte 23 des Transportmoduls 20 aus der Position nach Figur 3 über den Gelenkmechanismus 22 in die Position nach Figur 4 bzw. in die Warteposition nach Figur 4 zurückgeschwenkt. Eine Zusammenschau der Figuren 3 und 4 verdeutlicht darüber hinaus, dass der Faltmechanismus 45 aus seiner in Figur 3 noch eingenommene Warteposition WP in seine Betriebsposition BP nach Figur 4 über den Gelenkmechanismus 32 geschwenkt wird, in welcher Betriebsposition BP die Faltfinger 24 des Faltmechanismus 45 Laschen von flächigen Verpackungszuschnitten 42 (vgl. Figur 1) aufrichten können. Auch das Schwenken des Faltmechanismus 45 kann in diversen Ausführungsformen manuell oder in diversen weiteren Ausführungsformen über einen Aktor vorgenommen werden.

Figuren 2 bis 4 lassen hierbei erkennen, dass der Faltmechanismus 45 bzw. die Ketten- und/oder Riementriebe 44 mit den hieran befestigten Faltfingern 24 ausschließlich rechtsseitig gegenüber dem Transportmittel 2 angeordnet ist. Diese Anordnung wird unabhängig davon beibehalten, ob sich der Faltmechanismus 45 und das Transportmittel 2 in einer jeweiligen Betriebsposition BP oder in einer jeweiligen Warteposition WP befinden.

Figur 5 zeigt eine schematische Ansicht einer zweiten Ausführungsform einer erfindungsgemäßen Vorrichtung 1 und verdeutlicht einzelne Schritte, wie sie bei diversen Ausführungsformen des erfindungsgemäßen Verfahrens 100 vorgesehen sein können. Auch die Ausführungsform aus Figur 5 umfasst ein Arbeitsmodul 30 mit einem Faltmechanismus 45, welcher entsprechend dem Ausführungsbeispiel nach Figuren 2 bis 4 ausgebildet ist und über einen Gelenkmechanismus 32 aus der in Figur 5 gezeigten Warteposition WP in eine Betriebsposition BP und aus einer Betriebsposition BP in die in Figur 5 gezeigte Warteposition WP geschwenkt werden kann. Weiterhin umfasst die Vorrichtung 1 ein Transportmodul 20 mit einem Transportmittel 2, welches in Figur 5 eine Betriebsposition BP eingenommen hat. Das Transportmittel 2 ist bei der Ausführungsform nach Figur 5 als umlaufendes Fördertrum 21 einer Horizontalfördereinrichtung 25 ausgebildet. Die Horizontalfördereinrichtung 25 ist Bestandteil des Transportmoduls 20 und umfasst einen Motor M, welcher das Fördertrum 21 umlaufend antreibt. Soll das Transportmittel 2 bzw. die Horizontalfördereinrichtung 25 aus der Betriebsposition BP nach Figur 5 in eine Warteposition WP überführt werden, so wird das Transportmittel 2 bzw. die Horizontalfördereinrichtung 25 hierzu um eine durch den Gelenkmechanismus 22 bereitgestellte Drehachse in Richtung nach unten geschwenkt.

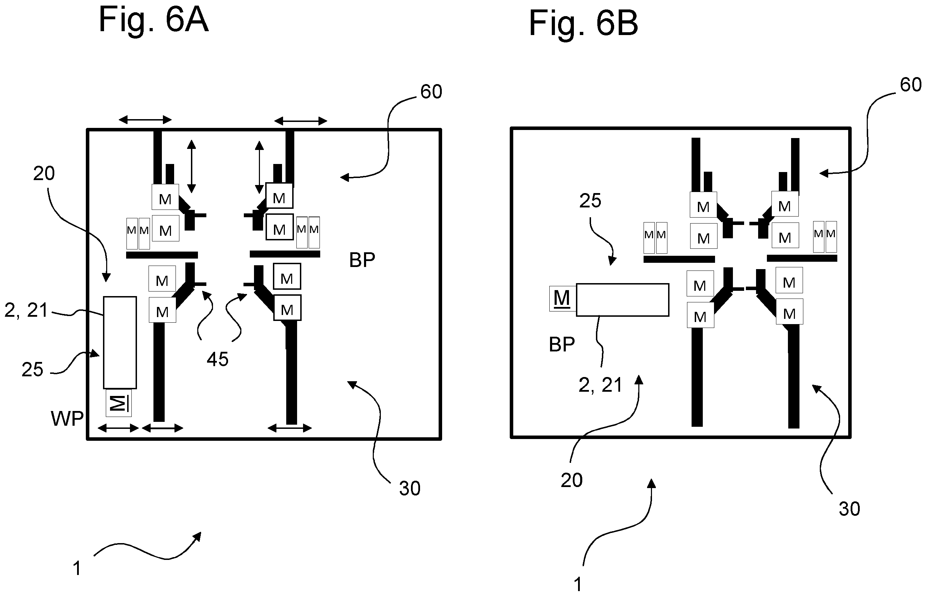

Figuren 6a und 6b zeigen eine schematische Ansicht einer dritten Ausführungsform einer erfindungsgemäßen Vorrichtung 1 und verdeutlichen einzelne Schritte, wie sie bei diversen Ausführungsformen des erfindungsgemäßen Verfahrens 100 (vgl. Figur 8) vorgesehen sein können. Die Ausführungsform einer Vorrichtung 1 aus dem Ausführungsbeispiel nach Figuren 6a und 6b umfasst weiterhin ein Transportmodul 20 mit einem Transportmittel 2, welches als umlaufendes Fördertrum 21 einer Horizontalfördereinrichtung 25 ausgebildet ist. Auch ist weiterhin ein Arbeitsmodul 30 mit einem Faltmechanismus 45 vorgesehen, welcher Laschen von flächigen Verpackungszuschnitten 42 aufrichten kann.

Um obere Laschen von Verpackungszuschnitten 42 einzuschlagen und Umverpackungen zu schließen, besitzt die Vorrichtung 1 aus dem Ausführungsbeispiel nach Figuren 6a und 6b zudem einen Schließmechanismus 60. Der Schließmechanismus 60 kann mehrere Ketten- und/oder Riementriebe besitzen, die entsprechende Einschlagmittel zum Schließen von oberen Laschen umlaufend bewegen. Wie vorhergehend bereits erwähnt, kann es sein, dass über die als Bestandteil des Transportmoduls 20 ausgebildete Horizontalfördereinrichtung 25 Getränkebehälter 14 bewegt werden, welche auf keinem flächigen Verpackungszuschnitt 42 aufstehen, so dass während eines Transportes über das Transportmittel 2 keine Laschen von flächigen Verpackungszuschnitten 42 gefaltet bzw. in eine aufrechte Orientierung überführt werden müssen.

Befindet sich der Faltmechanismus 45 entsprechend Figur 6a in seiner Betriebsposition BP, so nimmt auch der Schließmechanismus 60 seine Betriebsposition BP ein. Der Faltmechanismus 45 überführt sodann in der Betriebsposition BP Laschen von flächigen Verpackungszuschnitten 42 in eine aufrechte Orientierung, wobei der Schließmechanismus 60 obere Laschen dieser flächigen Verpackungszuschnitte 42 sodann schließen kann. Sofern das Transportmittel 2 seine Betriebsposition BP gemäß Figur 6b eingenommen hat und Getränkebehälter 14 ohne einen flächigen Verpackungszuschnitt 42 bewegt werden, ist der Schließmechanismus 60 nicht mehr notwendig, um obere Laschen schließen zu können. Um Probleme während der Bewegung von Getränkebehältern 14 über das in der Betriebsposition BP angeordnete Transportmittel 2 zu vermeiden, ist auch der Schließmechanismus 60 aus der Betriebsposition BP nach Figur 6a in die Warteposition WP nach Figur 6b zu überführen. Hierzu steht der Schließmechanismus 60 mit einer Linearführung in Verbindung, über welche der Schließmechanismus 60 aus seiner Betriebsposition BP nach Figur 6a in die Warteposition WP nach Figur 6b in horizontaler Richtung verschoben werden kann.

Figuren 6a und 6b zeigen darüber hinaus, dass sich der Schließmechanismus 60 ausschließlich oberhalb des Transportmittel 2 bzw. oberhalb der Horizontalfördereinrichtung 25 und ausschließlich oberhalb des Faltmechanismus 45 befindet. Referenz M verweist zudem jeweils auf einen Motor, welcher dem Transportmodul 20 oder dem Arbeitsmodul 30 zugeordnet ist. Über die Motoren M können beispielsweise als Bestandteil des Faltmechanismus 45 ausgebildete Ketten- und/oder Riementriebe 44 umlaufend bewegt werden. Der als Bestandteil der Horizontalfördereinrichtung 25 ausgebildete Motor ist zur umlaufenden Bewegung des als Fördertrum 21 ausgebildeten Transportmittels 2 vorgesehen.

Auch verdeutlicht eine Zusammenschau der Figuren 6a und 6b, dass das Transportmittel 2 aus der Warteposition WP nach Figur 6a in die Betriebsposition BP mittels einer Drehbewegung gelangt. Hierzu kann das Transportmittel 2 bzw. die Horizontalfördereinrichtung 25 mit einem Gelenkmechanismus entsprechend den Ausführungsbeispielen nach Figuren 2 bis 5 in Verbindung stehen. Die Drehbewegung kann aktorisch oder manuell bewegt werden. Auch kann es sein, dass das Transportmittel 2 mechanisch an den Faltmechanismus 45 gekoppelt ist, so dass der Faltmechanismus 45 das Transportmittel 2 bzw. die Horizontalfördereinrichtung 25 in seine Betriebsposition BP zieht.

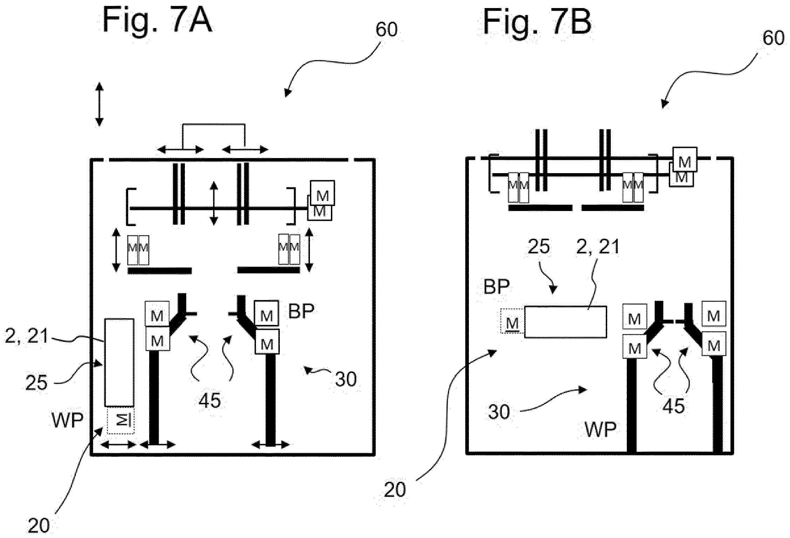

Figuren 7a und 7b zeigen eine schematische Ansicht einer vierten Ausführungsform einer erfindungsgemäßen Vorrichtung 1 und verdeutlichen einzelne Schritte, wie sie bei diversen Ausführungsformen des erfindungsgemäßen Verfahrens 100 vorgesehen sein können. Auch die Ausführungsform einer Vorrichtung 1 aus dem Ausführungsbeispiel nach Figuren 7a und 7b umfasst weiterhin ein Transportmodul 20 mit einem Transportmittel 2, welches als umlaufendes Fördertrum 21 einer Horizontalfördereinrichtung 25 ausgebildet ist. Auch ist weiterhin ein Arbeitsmodul 30 mit einem Faltmechanismus 45 vorgesehen, welcher Laschen von flächigen Verpackungszuschnitten 42 (vgl. Figur 1) aufrichten kann. Oberhalb des Arbeitsmoduls 30 und oberhalb des Transportmoduls 20 befindet sich ein Schließmechanismus 60, welcher obere Laschen einschlagen und hierdurch eine jeweilige Umverpackung schließen kann.

In Figur 7a befindet sich der Faltmechanismus 45 in seiner Betriebsposition BP, wohingegen das Transportmittel 2 in seiner Warteposition WP angeordnet ist. In Figur 7b hat der Faltmechanismus 45 in seine Warteposition WP gewechselt, wobei das Transportmittel 2 mittels einer Drehbewegung in seine Betriebsposition BP überführt wurde. Eine Zusammenschau der Figuren 7a und 7b verdeutlicht zudem, dass der Schließmechanismus 60 aus seiner Betriebsposition BP nach Figur 7a mittels einer vertikalen Hebebewegung in seine Warteposition WP nach Figur 7b überführt wurde. Sowohl für den Fall, dass sich das Transportmittel 2 in seiner Betriebsposition BP befindet (vgl. Figur 7a) als auch für den Fall, dass der Faltmechanismus 45 sich in seiner Betriebsposition BP befindet (vgl. Figur 7b) ist der Schließmechanismus 60 jeweils oberhalb des Transportmittels 2 und oberhalb des Faltmechanismus 45 angeordnet.

Figur 8 zeigt im Flussdiagramm Schritte, wie sie einzeln oder in der gemäß Figur 8 dargestellten Kombination bzw. Reihenfolge bei diversen Ausführungsformen des erfindungsgemäßen Verfahrens 100 vorgesehen sein können. Das Verfahren 100 kann für eine Vorrichtung 1 gemäß einem der Ausführungsbeispiele nach Figuren 2 bis 7 verwendet werden bzw. mittels einer Vorrichtung 1 gemäß einem der Ausführungsbeispiele nach Figuren 2 bis 7 umgesetzt werden, so dass im Hinblick auf die verwendeten Bezugsziffern auf die vorhergehenden Ausführungsbeispiele rückverwiesen wird.

Im Verfahrensschritt 110 wird ein Faltmechanismus 45 eines Arbeitsmoduls 30 mittels einer Drehbewegung in eine Betriebsposition BP gebracht, wohingegen ein Transportmittel 2 eines Transportmoduls 20 in einer Warteposition WP verbleibt. Sodann transportiert das Arbeitsmodul 30 mit dem weiterhin in der Betriebsposition BP angeordneten Faltmechanismus 45 Zusammenstellungen 12 an Getränkebehältern 14 und überführt Laschen von flächigen Verpackungszuschnitten 42 in eine aufrechte Orientierung, auf welchen flächigen Verpackungszuschnitten 42 die Zusammenstellungen 12 an Getränkebehältern 14 aufstehen.

Zeitlich auf den Verfahrensschritt 110 folgt der Verfahrensschritt 120, bei welchem der bis dahin in der Betriebsposition BP angeordnete Faltmechanismus 45 mittels einer Drehbewegung in eine Warteposition WP überführt wird. Im Verfahrensschritt 120 wird zudem das bis dahin noch in seiner Warteposition WP angeordnete Transportmittel 2 des Transportmoduls 20 aus seiner Warteposition WP mittels einer Drehbewegung in seine Betriebsposition BP gebracht.

Im Schritt 130 werden Getränkebehälter 14 gleitend über das noch in der Betriebsposition BP angeordnete Transportmittel 2 hinwegbewegt, wobei die Getränkebehälter 14 hierbei auf keinem flächigen Verpackungszuschnitt 42 aufstehen. Auf diese Getränkebehälter 14, welche entsprechend dem Schritt 130 gleitend über das noch in der Betriebsposition BP angeordnete Transportmittel 2 hinwegbewegt werden, wird zu einem späteren Zeitpunkt thermoplastisches Verpackungsmaterial aufgebracht, über welches mehrere Getränkebehälter zu einem Gebinde zusammengefasst werden. Während des Verfahrens 100 bzw. zeitlich während der Schritte 110 bis 130 ist der Faltmechanismus 45 ausschließlich rechts- oder linksseitig benachbart gegenüber dem Transportmittel 2 des Transportmoduls 20 angeordnet.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 2: Transportmittel
- 3: Zulauf
- 4: Transportband
- 7: Ketten- und/oder Riementrieb
- 9: Schubstange
- 12: Zusammenstellung
- 14: Getränkebehälter
- 16: Überschubplatte
- 20: Transportmodul
- 21: Umlaufendes Fördertrum
- 22: Gelenkmechanismus
- 23: Platte
- 24: Faltfinger
- 25: Horizontalfördereinrichtung
- 26: Standfläche
- 30: Arbeitsmodul
- 32: Gelenkmechanismus
- 40: Vorrat
- 42: Flächiger Verpackungszuschnitt
- 44: Ketten- und/oder Riementrieb
- 45: Faltmechanismus
- 50: Verpackungsanlage
- 60: Schließmechanismus
- 62: Auslaufband
- 70: Einschlagmodul
- 72: Ketten- und/oder Riementrieb
- 74: Einschlagstab

- 100: Verfahren
- 110: Erster Verfahrensschritt
- 120: Zweiter Verfahrensschritt
- 130: Dritter Verfahrensschritt
- BP: Betriebsposition
- M: Motor
- TR: Transportrichtung
- WP: Warteposition

## Patentansprüche

1. Vorrichtung (1) zum Umgang mit zu verpackenden Artikeln, umfassend
- mindestens ein Arbeitsmodul (30), welches Verpackungen einer ersten Verpackungsart mit hierauf aufgesetzten Artikeln bewegen kann und wenigstens einen Faltmechanismus (45) zum Aufrichten von hinteren und/oder vorderen Laschen besitzt, welche hinteren und/oder vorderen Laschen durch die Verpackungen der ersten Verpackungsart ausgebildet werden sowie umfassend
- wenigstens ein Transportmodul (20), welches ein Transportmittel (2) umfasst, entlang welchen Transportmittels (2) für Verpackungen einer zweiten Verpackungsart vorgesehene Artikel bewegbar sind, welche zweite Verpackungsart sich von der ersten Verpackungsart unterscheidet, wobei vorgesehen ist, dass
- der wenigstens eine Faltmechanismus (45) des mindestens einen Arbeitsmoduls (30) und das Transportmittel (2) des wenigstens einen Transportmoduls (20) zwischen einer jeweiligen Betriebsposition (BP) und einer jeweiligen Warteposition (WP) alternierend hin- und herbewegbar sind, so dass sich entweder der wenigstens eine Faltmechanismus (45) des mindestens einen Arbeitsmoduls (30) oder das Transportmittel (2) des wenigstens einen Transportmoduls (20) in seiner jeweiligen Betriebsposition (BP) befindet, die Vorrichtung (1) **dadurch gekennzeichnet, dass**
- die Betriebspositionen (BP) und die Wartepositionen (WP) derart ausgebildet sind, dass der wenigstens eine Faltmechanismus (45) des mindestens einen Arbeitsmoduls (30) ausschließlich rechts- oder linksseitig benachbart zum Transportmittel (2) des wenigstens einen Transportmoduls (20) angeordnet ist.

2. Vorrichtung nach Anspruch 1, bei welcher
- das Transportmittel (2) eine Standfläche (26) bereitstellt, entlang welcher Standfläche (26) Artikel, welche für Verpackungen der zweiten Verpackungsart vorgesehen sind, gleitend bewegt werden können oder bei welcher
- das Transportmittel (2) als umlaufend angetriebener Bestandteil einer Horizontalfördereinrichtung (25) des wenigstens einen Transportmoduls (20) ausgebildet ist.

3. Vorrichtung nach Anspruch 1 oder Anspruch 2, bei welcher
- das Transportmittel (2) des wenigstens einen Transportmoduls (20) mit einer vorzugsweise durch einen Gelenkmechanismus (22) ausgebildeten Drehachse in Verbindung steht, über welche vorzugsweise durch einen Gelenkmechanismus (22) ausgebildete Drehachse das Transportmittel (2) aus seiner Betriebsposition (BP) in seine Warteposition und aus seiner Warteposition (WP) in seine Betriebsposition (BP) schwenkbar ist und/oder bei welcher
- der wenigstens eine Faltmechanismus (45) mit einer vorzugsweise durch einen Gelenkmechanismus (32) ausgebildeten Drehachse in Verbindung steht, über welche vorzugsweise durch einen Gelenkmechanismus (32) ausgebildete Drehachse der wenigstens eine Faltmechanismus (45) aus seiner Betriebsposition (BP) in seine Warteposition (WP) und aus seiner Warteposition (WP) in seine Betriebsposition (BP) schwenkbar ist.

4. Vorrichtung nach einem der Ansprüche 1 bis 3, bei welcher
- das Transportmittel (2) des wenigstens einen Transportmoduls (20) mit einer vorzugsweise durch einen Gelenkmechanismus (22) ausgebildeten ersten Drehachse in Verbindung steht, über welche vorzugsweise durch einen Gelenkmechanismus (22) ausgebildete erste Drehachse das Transportmittel (2) aus seiner Betriebsposition (BP) in seine Warteposition (WP) und aus seiner Warteposition (WP) in seine Betriebsposition (BP) schwenkbar ist und bei welcher
- der wenigstens eine Faltmechanismus (45) mit einer vorzugsweise durch einen Gelenkmechanismus (32) ausgebildeten weiteren Drehachse in Verbindung steht, über welche vorzugsweise durch einen Gelenkmechanismus (32) ausgebildete weitere Drehachse der wenigstens eine Faltmechanismus (45) aus seiner Betriebsposition (BP) in seine Warteposition (WP) und aus seiner Warteposition (WP) in seine Betriebsposition (BP) schwenkbar ist und wobei vorgesehen ist, dass
die vorzugsweise durch einen Gelenkmechanismus (22) ausgebildete erste Drehachse und die vorzugsweise durch einen Gelenkmechanismus (32) ausgebildete weitere Drehachse zueinander beabstandet angeordnet sind.

5. Vorrichtung nach Anspruch 4, bei welcher die vorzugsweise durch einen Gelenkmechanismus (22) ausgebildete erste Drehachse und die vorzugsweise durch einen Gelenkmechanismus (32) ausgebildete weitere Drehachse parallel zueinander verlaufen.

6. Vorrichtung nach einem der Ansprüche 1 bis 5, bei welcher
- das mindestens eine Arbeitsmodul (30) eine Linearführung umfasst, über welche Linearführung der wenigstens eine Faltmechanismus (45) in horizontaler Richtung aus seiner Betriebsposition (BP) in seine Warteposition (WP) und aus seiner Warteposition (WP) in seine Betriebsposition (BP) bewegbar ist und/oder bei welcher
- das wenigstens eine Transportmodul (20) eine Linearführung umfasst, über welche Linearführung das Transportmittel (2) in horizontaler Richtung aus seiner Betriebsposition (BP) in seine Warteposition (WP) und aus seiner Warteposition (WP) in seine Betriebsposition (BP) bewegbar ist.

7. Vorrichtung nach einem der Ansprüche 1 bis 6, bei welcher das Transportmittel (2) des wenigstens einen Transportmoduls (20) an den wenigstens einen Faltmechanismus (45) des mindestens einen Arbeitsmoduls (30) mechanisch gekoppelt ist, so dass das Transportmittel (2) des wenigstens einen Transportmoduls (20) bei einer Bewegung des wenigstens einen Faltmechanismus (45) aus seiner Betriebsposition (BP) in seine Warteposition (WP) und aus seiner Warteposition (WP) in seine Betriebsposition (BP) gemeinsam mit dem wenigstens einen Faltmechanismus (45) jeweils mitbewegt wird.

8. Vorrichtung nach einem der Ansprüche 1 bis 7, umfassend
- mindestens einen Schließmechanismus (60) zum Falten von oberen Laschen, welche oberen Laschen durch die Verpackungen der ersten Verpackungsart ausgebildet werden, wobei der mindestens eine Schließmechanismus (60) zwischen einer Betriebsposition (BP) und einer Warteposition (WP) alternierend hin- und herbewegbar ist, so dass der mindestens eine Schließmechanismus (60) und der wenigstens eine Faltmechanismus (45) gemeinsam ihre jeweilige Betriebsposition (BP) und gemeinsam ihre jeweilige Warteposition (WP) einnehmen können und bei welcher Vorrichtung vorgesehen ist, dass
- die Betriebspositionen (BP) und die Wartepositionen (WP) des wenigstens einen Faltmechanismus (45) und des Transportmittels (2) derart ausgebildet sind, dass der mindestens eine Schließmechanismus (60) ausschließlich oberhalb des wenigstens einen Faltmechanismus (45) und ausschließlich oberhalb des Transportmittels (2) angeordnet ist.

9. Verfahren (100) zum Anpassen einer Vorrichtung (1) für den Transport von zum Verpacken vorgesehenen Artikeln an eine jeweilige für die Artikel vorgesehene Verpackungsart, welche Vorrichtung (1)
- mindestens ein Arbeitsmodul (30) umfasst, das Verpackungen einer ersten Verpackungsart mit hierauf aufgesetzten Artikeln bewegen kann und wenigstens einen Faltmechanismus (45) zum Aufrichten von hinteren und/oder vorderen Laschen besitzt, welche hinteren und/oder vorderen Laschen die Verpackungen der ersten Verpackungsart ausbilden und welche Vorrichtung (1)
- wenigstens ein Transportmodul (20) besitzt, das ein Transportmittel (2) umfasst, entlang welchen Transportmittels (2) für Verpackungen einer zweiten Verpackungsart vorgesehene Artikel bewegbar sind, welche zweite Verpackungsart sich von der ersten Verpackungsart unterscheidet und bei welchem Verfahren (100) vorgesehen ist, dass
- der wenigstens eine Faltmechanismus (45) und das Transportmittel (2) zwischen einer jeweiligen Betriebsposition (BP) und einer jeweiligen Warteposition (WP) alternierend hin- und herbewegt werden, so dass sich entweder der wenigstens eine Faltmechanismus (45) des mindestens einen Arbeitsmoduls (30) oder das Transportmittel (2) des wenigstens einen Transportmoduls (20) in seiner jeweiligen Betriebsposition befindet, das Verfahren **dadurch gekennzeichnet, dass**
die alternierende Bewegung zwischen der jeweiligen Betriebsposition (BP) und der jeweiligen Warteposition (WP) derart durchgeführt werden, dass der wenigstens eine Faltmechanismus (45) zeitlich während und nach einem Beenden einer alternierenden Bewegung ausschließlich rechts- oder linksseitig benachbart gegenüber dem Transportmittel (2) des wenigstens einen Transportmoduls (20) angeordnet ist.

10. Verfahren nach Anspruch 9, bei welchem
- das Transportmittel (2) in der Betriebsposition (BP) umlaufend angetrieben wird und hierbei für Verpackungen einer zweiten Verpackungsart vorgesehene Artikel bewegt und/oder bei welchem
- über das Transportmittel (2) in der Betriebsposition (BP) für Verpackungen einer zweiten Verpackungsart vorgesehene Artikel gleitend hinwegbewegt werden.

11. Verfahren nach Anspruch 9 oder Anspruch 10, bei welchem
- das Transportmittel (2) des wenigstens einen Transportmoduls (20) über eine vorzugsweise durch einen Gelenkmechanismus (22) ausgebildete Drehachse in seine Betriebsposition (BP) geschwenkt wird und über die vorzugsweise durch einen Gelenkmechanismus (22) ausgebildete Drehachse aus seiner Betriebsposition (BP) in seine Warteposition (WP) zurückgeschwenkt wird und/oder bei welchem
- der wenigstens eine Faltmechanismus (45) über eine vorzugsweise durch einen Gelenkmechanismus ausgebildete Drehachse (32) in seine Betriebsposition (BP) geschwenkt wird und über die vorzugsweise durch einen Gelenkmechanismus (32) ausgebildete Drehachse aus seiner Betriebsposition (BP) in seine Warteposition (WP) zurückgeschwenkt wird.

12. Verfahren nach einem der Ansprüche 9 bis 11, bei welchem
- im Rahmen des alternierenden Hin- und Herbewegens der wenigstens eine Faltmechanismus (45) über eine Linearführung in horizontaler Richtung aus seiner Betriebsposition (BP) in seine Warteposition (WP) und aus seiner Warteposition (WP) in seine Betriebsposition (BP) bewegt wird und/oder bei welchem
- im Rahmen des alternierenden Hin- und Herbewegens das Transportmittel (2) über eine Linearführung in horizontaler Richtung aus seiner Betriebsposition (BP) in seine Warteposition (WP) und aus seiner Warteposition (WP) in seine Betriebsposition (BP) bewegt wird.

13. Verfahren nach einem der Ansprüche 9 bis 12, bei welchem
- das Transportmittel (2) des wenigstens einen Transportmoduls (20) über eine vorzugsweise durch einen Gelenkmechanismus (22) ausgebildete Drehachse in seine Betriebsposition (BP) geschwenkt wird und über die vorzugsweise durch einen Gelenkmechanismus (22) ausgebildete Drehachse aus seiner Betriebsposition (BP) in seine Warteposition (WP) zurückgeschwenkt wird und/oder bei welchem Verfahren (100)
- der wenigstens eine Faltmechanismus (45) über einen Gelenkmechanismus (32) in seine Betriebsposition (BP) geschwenkt wird und über den Gelenkmechanismus (32) aus seiner Betriebsposition (BP) in seine Warteposition (WP) zurückgeschwenkt wird.

14. Verfahren nach einem der Ansprüche 9 bis 13, bei welchem
- im Rahmen des alternierenden Hin- und Herbewegens der wenigstens eine Faltmechanismus (45) über eine Linearführung in horizontaler Richtung aus seiner Betriebsposition (BP) in seine Warteposition (WP) und aus seiner Warteposition (WP) in seine Betriebsposition (BP) bewegt wird und/oder bei welchem
- im Rahmen des alternierenden Hin- und Herbewegens das Transportmittel (2) über eine Linearführung in horizontaler Richtung aus seiner Betriebsposition (BP) in seine Warteposition (WP) und aus seiner Warteposition (WP) in seine Betriebsposition (BP) bewegt wird.

15. Verfahren nach einem der Ansprüche 9 bis 14, bei welchem mindestens ein Schließmechanismus (60) zum Falten von oberen Laschen vorgesehen ist, welche oberen Laschen durch die Verpackungen der ersten Verpackungsart ausgebildet werden, und wobei vorgesehen ist, dass der mindestens eine Schließmechanismus (60) zwischen einer Betriebsposition (BP) und einer Warteposition (WP) alternierend hin- und herbewegt wird, so dass der mindestens eine Schließmechanismus (60) und der wenigstens eine Faltmechanismus (45) zeitgleich ihre jeweilige Betriebsposition (BP) und zeitgleich ihre jeweilige Warteposition (WP) einnehmen und bei welchem Verfahren vorgesehen ist, dass
- die alternierende Bewegung für den mindestens einen Schließmechanismus (60) derart durchgeführt wird, dass sich der mindestens eine Schließmechanismus (60) zeitlich während und nach einem Beenden einer alternierenden Bewegung ausschließlich oberhalb des Transportmittels (2) und ausschließlich oberhalb des wenigstens einen Faltmechanismus (45) befindet.

## Claims

1. A device (1) used to handle articles to be packaged, the device (1) comprising
- at least one work module (30), which can move packages of a first packaging type with articles placed thereonto, and which work module (30) has at least one folding mechanism (45) used to erect back and/or front flaps, which are formed by the packages of the first packaging type, as well as comprising
- at least one transport module (20), which comprises a transport means (2), along which articles intended for packages of a second packaging type are movable, which second packaging type differs from the first packaging type, wherein it is provided that
- the at least one folding mechanism (45) of the at least one work module (30) and the transport means (2) of the at least one transport module (20) are movable back and forth, alternating between a particular operating position (BP) and a particular waiting position (WP), such that either the at least one folding mechanism (45) of the at least one work module (30) or the transport means (2) of the at least one transport module (20) is situated in its particular operating position (BP), the device (1) being **characterised in that**
- the operating positions (BP) and the waiting positions (WP) are configured in such a manner that the at least one folding mechanism (45) of the at least one work module (30) is disposed exclusively adjacent to the right side or to the left side of the transport means (2) of the at least one transport module (20).

2. The device according to claim 1, in which
- the transport means (2) provides a support surface (26), along which articles intended for packages of the second packaging type can be slidingly moved, or in which
- the transport means (2) is configured as circulatingly driven component of a horizontal conveying system (25) of the at least one transport module (20).

3. The device according to claim 1 or claim 2, in which
- the transport means (2) of the at least one transport module (20) is connected to an axis of rotation preferably formed by a joint mechanism (22), via which axis of rotation preferably formed by a joint mechanism (22) the transport means (2) is swivelable from its operating position (BP) into its waiting position and from its waiting position (WP) into its operating position (BP), and/or in which
- the at least one folding mechanism (45) is connected to an axis of rotation preferably formed by a joint mechanism (32), via which axis of rotation preferably formed by a joint mechanism (32) the at least one folding mechanism (45) is swivelable from its operating position (BP) into its waiting position (WP) and from its waiting position (WP) into its operating position (BP).

4. The device according to one of the claims 1 to 3, in which
- the transport means (2) of the at least one transport module (20) is connected to a first axis of rotation preferably formed by a joint mechanism (22), via which first axis of rotation preferably formed by a joint mechanism (22) the transport means (2) is swivelable from its operating position (BP) into its waiting position (WP) and from its waiting position (WP) into its operating position (BP), and in which
- the at least one folding mechanism (45) is connected to a second axis of rotation preferably formed by a joint mechanism (32), via which second axis of rotation preferably formed by a joint mechanism (32) the at least one folding mechanism (45) is swivelable from its operating position (BP) into its waiting position (WP) and from its waiting position (WP) into its operating position (BP), and wherein it is provided that
the first axis of rotation preferably formed by a joint mechanism (22) and the second axis of rotation preferably formed by a joint mechanism (32) are arranged spaced apart from each other.

5. The device according to claim 4, in which the first axis of rotation preferably formed by a joint mechanism (22) and the second axis of rotation preferably formed by a joint mechanism (32) are parallel to each other.

6. The device according to one of the claims 1 to 5, in which
- the at least one work module (30) comprises a linear guide, via which the at least one folding mechanism (45) is movable in horizontal direction from its operating position (BP) into its waiting position (WP) and from its waiting position (WP) into its operating position (BP), and/or in which
- the at least one transport module (20) comprises a linear guide, via which the transport means (2) is movable in horizontal direction from its operating position (BP) into its waiting position (WP) and from its waiting position (WP) into its operating position (BP).

7. The device according to one of the claims 1 to 6, in which the transport means (2) of the at least one transport module (20) is mechanically coupled to the at least one folding mechanism (45) of the at least one work module (30) such that the transport means (2) of the at least one transport module (20) is in each instance moved along together with the at least one folding mechanism (45) in a movement of the at least one folding mechanism (45) from its operating position (BP) into its waiting position (WP) and from its waiting position into its operating position.

8. The device according to one of the claims 1 to 7, comprising
- at least one closing mechanism (60) used to fold top flaps, which top flaps are formed by the packages of the first packaging type, wherein the at least one closing mechanism (60) is movable back and forth, alternating between an operating position (BP) and a waiting position (WP), such that the at least one closing mechanism (60) and the at least one folding mechanism (45) can assume their particular operating position (BP) together and their particular waiting position (WP) together, and in which device it is provided that
- the operating positions (BP) and the waiting positions (WP) of the at least one folding mechanism (45) and of the transport means (2) are configured such that the at least one closing mechanism (60) is disposed exclusively above the at least one folding mechanism (45) and exclusively above the transport means (2).

9. A method (100) used to adapt a device (1) for the transport of articles intended for packaging to a particular packaging type intended for the articles, which device (1)
- comprises at least one work module (30), which can move packages of a first packaging type with articles placed thereonto, and which work module (30) has at least one folding mechanism (45) used to erect back and/or front flaps, which form the packages of the first packaging type, and which device (1)
- has at least one transport module (20), which comprises a transport means (2), along which transport means (2) articles intended for packages of a second packaging type are movable, which second packaging type differs from the first packaging type, and in which method (100) it is provided that
- the at least one folding mechanism (45) and the transport means (2) are moved back and forth, alternating between a particular operating position (BP) and a particular waiting position (WP), such that either the at least one folding mechanism (45) of the at least one work module (30) or the transport means (2) of the at least one transport module (20) is situated in its particular operating position, the method being **characterised in that**
the alternating movement between the particular operating position (BP) and the particular waiting position (WP) is carried out in such a manner that, temporally during and after a completion of an alternating movement, the at least one folding mechanism (45) is disposed exclusively adjacent to the right side or to the left side in relation to the transport means (2) of the at least one transport module (20).

10. The method according to claim 9, in which
- the transport means (2) is circulatingly driven in the operating position (BP) and in this context moves articles intended for packages of a second packaging type, and/or in which
- articles intended for packages of a second packaging type are slidingly moved along the transport means (2) in the operating position (BP).

11. The method according to claim 9 or claim 10, in which
- the transport means (2) of the at least one transport module (20) is swivelled into its operating position (BP) via an axis of rotation preferably formed by a joint mechanism (22) and is swivelled back from its operating position (BP) into its waiting position (WP) via the axis of rotation preferably formed by a joint mechanism (22), and/or in which
- the at least one folding mechanism (45) is swivelled into its operating position (BP) via an axis of rotation preferably formed by a joint mechanism (32) and is swivelled back from its operating position (BP) into its waiting position (WP) via the axis of rotation preferably formed by a joint mechanism (32).

12. The method according to one of the claims 9 to 11, in which
- the at least one folding mechanism (45) is moved in the context of the alternating back and forth movement via a linear guide in horizontal direction from its operating position (BP) into its waiting position (WP) and from its waiting position (WP) into its operating position (BP), and/or in which
- the transport means (2) is moved in the context of the alternating back and forth movement via a linear guide in horizontal direction from its operating position (BP) into its waiting position (WP) and from its waiting position (WP) into its operating position (BP).

13. The method according to one of the claims 9 to 12, in which
- the transport means (2) of the at least one transport module (20) is swivelled into its operating position (BP) via an axis of rotation preferably formed by a joint mechanism (22) and is swivelled back from its operating position (BP) into its waiting position (WP) via the axis of rotation preferably formed by a joint mechanism (22), and/or in which method (100)
- the at least one folding mechanism (45) is swivelled into its operating position (BP) via a joint mechanism (32) and is swivelled back from its operating position (BP) into its waiting position (WP) via the joint mechanism (32).

14. The method according to one of the claims 9 to 13, in which
- the at least one folding mechanism (45) is moved in the context of the alternating back and forth movement via a linear guide in horizontal direction from its operating position (BP) into its waiting position (WP) and from its waiting position (WP) into its operating position (BP), and/or in which
- the transport means (2) is moved in the context of the alternating back and forth movement via a linear guide in horizontal direction from its operating position (BP) into its waiting position (WP) and from its waiting position (WP) into its operating position (BP).

15. The method according to one of the claims 9 to 14, in which at least one closing mechanism (60) used to fold top flaps is provided, which top flaps are formed by the packages of the first packaging type, and wherein it is provided that the at least one closing mechanism (60) is moved back and forth, alternating between an operating position (BP) and a waiting position (WP), such that the at least one closing mechanism (60) and the at least one folding mechanism (45) assume their particular operating position (BP) simultaneously and assume their particular waiting position (WP) simultaneously, and in which method it is provided that
- the alternating movement for the at least one closing mechanism (60) is carried out such that, temporally during and after a completion of an alternating movement, the at least one closing mechanism (60) is situated exclusively above the transport means (2) and exclusively above the at least one folding mechanism (45).

## Revendications

1. Dispositif (1) de manipulation d'articles à emballer, comprenant
- au moins un module de travail (30) qui peut déplacer des emballages d'un premier type d'emballage avec des articles placés sur ceux-ci et qui comprend au moins un mécanisme de pliage (45) pour dresser des rabats arrière et/ou avant, lesquels rabats arrière et/ou avant sont formés par les emballages du premier type d'emballage, et comprenant
- au moins un module de transport (20) qui comprend un moyen de transport (2), le long duquel moyen de transport (2) peuvent être déplacés des articles prévus pour des emballages d'un deuxième type d'emballage, lequel deuxième type d'emballage diffère du premier type d'emballage, dans lequel il est prévu que
- ledit au moins un mécanisme de pliage (45) dudit au moins un module de travail (30) et le moyen de transport (2) dudit au moins un module de transport (20) peuvent être animés d'un mouvement alternatif de va-et-vient entre une position de fonctionnement (BP) respective et une position d'attente (WP) respective de sorte que soit ledit au moins un mécanisme de pliage (45) dudit au moins un module de travail (30) soit le moyen de transport (2) dudit au moins un module de transport (20) se trouve dans sa position de fonctionnement (BP) respective, le dispositif (1) étant **caractérisé par le fait que**
- les positions de fonctionnement (BP) et les positions d'attente (WP) sont conçues de telle sorte que ledit au moins un mécanisme de pliage (45) dudit au moins un module de travail (30) est disposé exclusivement du côté droit ou du côté gauche en avoisinant le moyen de transport (2) dudit au moins un module de transport (20).

2. Dispositif selon la revendication 1, dans lequel
- le moyen de transport (2) offre une surface d'appui (26), le long de laquelle surface d'appui (26) peuvent être déplacés de manière coulissante des articles qui sont prévus pour des emballages du deuxième type d'emballage, ou dans lequel
- le moyen de transport (2) est conçu en tant que composant entraîné en circulation d'un dispositif de transport horizontal (25) dudit au moins un module de transport (20).

3. Dispositif selon la revendication 1 ou la revendication 2, dans lequel
- le moyen de transport (2) dudit au moins un module de transport (20) est relié à un axe de rotation qui est formé de préférence par un mécanisme d'articulation (22), c'est par l'intermédiaire duquel axe de rotation formé de préférence par un mécanisme d'articulation (22) que le moyen de transport (2) peut pivoter de sa position de fonctionnement (BP) dans sa position d'attente et de sa position d'attente (WP) dans sa position de fonctionnement (BP), et/ou dans lequel
- ledit au moins un mécanisme de pliage (45) est relié à un axe de rotation qui est formé de préférence par un mécanisme d'articulation (32), c'est par l'intermédiaire duquel axe de rotation formé de préférence par un mécanisme d'articulation (32) que ledit au moins un mécanisme de pliage (45) peut pivoter de sa position de fonctionnement (BP) dans sa position d'attente (WP) et de sa position d'attente (WP) dans sa position de fonctionnement (BP).

4. Dispositif selon l'une quelconque des revendications 1 à 3, dans lequel
- le moyen de transport (2) dudit au moins un module de transport (20) est relié à un premier axe de rotation qui est formé de préférence par un mécanisme d'articulation (22), c'est par l'intermédiaire duquel premier axe de rotation formé de préférence par un mécanisme d'articulation (22) que le moyen de transport (2) peut pivoter de sa position de fonctionnement (BP) dans sa position d'attente (WP) et de sa position d'attente (WP) dans sa position de fonctionnement (BP), et dans lequel
- ledit au moins un mécanisme de pliage (45) est relié à un autre axe de rotation qui est formé de préférence par un mécanisme d'articulation (32), c'est par l'intermédiaire duquel autre axe de rotation formé de préférence par un mécanisme d'articulation (32) que ledit au moins un mécanisme de pliage (45) peut pivoter de sa position de fonctionnement (BP) dans sa position d'attente (WP) et de sa position d'attente (WP) dans sa position de fonctionnement (BP), et dans lequel il est prévu que
le premier axe de rotation qui est formé de préférence par un mécanisme d'articulation (22) et l'autre axe de rotation qui est formé de préférence par un mécanisme d'articulation (32) sont disposés à distance l'un par rapport à l'autre.

5. Dispositif selon la revendication 4, dans lequel le premier axe de rotation qui est formé de préférence par un mécanisme d'articulation (22) et l'autre axe de rotation qui est formé de préférence par un mécanisme d'articulation (32) s'étendent parallèlement l'un à l'autre.

6. Dispositif selon l'une quelconque des revendications 1 à 5, dans lequel
- ledit au moins un module de travail (30) comprend un guide linéaire, c'est par l'intermédiaire duquel guide linéaire que ledit au moins un mécanisme de pliage (45) peut être déplacé dans la direction horizontale de sa position de fonctionnement (BP) dans sa position d'attente (WP) et de sa position d'attente (WP) dans sa position de fonctionnement (BP), et/ou dans lequel
- ledit au moins un module de transport (20) comprend un guide linéaire, c'est par l'intermédiaire duquel guide linéaire que le moyen de transport (2) peut être déplacé dans la direction horizontale de sa position de fonctionnement (BP) dans sa position d'attente (WP) et de sa position d'attente (WP) dans sa position de fonctionnement (BP).

7. Dispositif selon l'une quelconque des revendications 1 à 6, dans lequel le moyen de transport (2) dudit au moins un module de transport (20) est couplé mécaniquement audit au moins un mécanisme de pliage (45) dudit au moins un module de travail (30), de sorte que, lorsque ledit au moins un mécanisme de pliage (45) est déplacé de sa position de fonctionnement (BP) dans sa position d'attente (WP) et de sa position d'attente (WP) dans sa position de fonctionnement (BP), le moyen de transport (2) dudit au moins un module de transport (20) est déplacé respectivement conjointement avec ledit au moins un mécanisme de pliage (45).

8. Dispositif selon l'une quelconque des revendications 1 à 7, comprenant:
- au moins un mécanisme de fermeture (60) destiné à plier des rabats supérieurs, lesquels rabats supérieurs sont formés par des emballages du premier type d'emballage, dans lequel ledit au moins un mécanisme de fermeture (60) peut être animé d'un mouvement alternatif de va-et-vient entre une position de fonctionnement (BP) et une position d'attente (WP) de sorte que ledit au moins un mécanisme de fermeture (60) et ledit au moins un mécanisme de pliage (45) peuvent occuper ensemble leur position de fonctionnement (BP) respective et occuper ensemble leur position d'attente (WP) respective, et dans lequel dispositif est prévu que
- les positions de fonctionnement (BP) et les positions d'attente (WP) dudit au moins un mécanisme de pliage (45) et du moyen de transport (2) sont conçues de telle sorte que ledit au moins un mécanisme de fermeture (60) est agencé exclusivement au-dessus dudit au moins un mécanisme de pliage (45) et exclusivement au-dessus dudit moyen de transport (2).

9. Procédé (100) d'adaptation d'un dispositif (1) pour le transport d'articles destinés à l'emballage, à un type respectif d'emballage prévu pour les articles, lequel dispositif (1)
- comprend au moins un module de travail (30) qui peut déplacer des emballages d'un premier type d'emballage avec des articles placés sur ceux-ci et qui comprend au moins un mécanisme de pliage (45) pour dresser des rabats arrière et/ou avant, lesquels rabats arrière et/ou avant forment les emballages du premier type d'emballage, et lequel dispositif (1)
- comprend au moins un module de transport (20) qui comprend un moyen de transport (2), le long duquel moyen de transport (2) peuvent être déplacés des articles prévus pour des emballages d'un deuxième type d'emballage, lequel deuxième type d'emballage diffère du premier type d'emballage, et dans lequel procédé (100) est prévu que
- ledit au moins un mécanisme de pliage (45) et le moyen de transport (2) sont animés d'un mouvement alternatif de va-et-vient entre une position de fonctionnement (BP) respective et une position d'attente (WP) respective de sorte que soit ledit au moins un mécanisme de pliage (45) dudit au moins un module de travail (30) soit le moyen de transport (2) dudit au moins un module de transport (20) se trouve dans sa position de fonctionnement respective, le procédé étant **caractérisé par le fait que**
le mouvement alternatif entre la position de fonctionnement (BP) respective et la position d'attente (WP) respective est effectué de telle sorte que, pendant et après avoir terminé un mouvement alternatif, ledit au moins un mécanisme de pliage (45) est disposé exclusivement du côté droit ou du côté gauche en avoisinant le moyen de transport (2) dudit au moins un module de transport (20).

10. Procédé selon la revendication 9, dans lequel,
- le moyen de transport (2) est entraîné en circulation en position de fonctionnement (BP) et, ce faisant, déplace des articles prévus pour des emballages d'un deuxième type d'emballage, et/ou dans lequel
- des articles prévus pour des emballages d'un deuxième type d'emballage sont déplacés de manière coulissante sur le moyen de transport (2) en position de fonctionnement (BP).

11. Procédé selon la revendication 9 ou la revendication 10, dans lequel
- le moyen de transport (2) dudit au moins un module de transport (20) est pivoté dans sa position de fonctionnement (BP) par le biais d'un axe de rotation qui est formé de préférence par un mécanisme d'articulation (22), et est repivoté de sa position de fonctionnement (BP) dans sa position d'attente (WP) par le biais dudit axe de rotation formé de préférence par un mécanisme d'articulation (22), et/ou dans lequel
- ledit au moins un mécanisme de pliage (45) est pivoté dans sa position de fonctionnement (BP) par le biais d'un axe de rotation (32) qui est formé de préférence par un mécanisme d'articulation, et est repivoté de sa position de fonctionnement (BP) dans sa position d'attente (WP) par le biais dudit axe de rotation formé de préférence par un mécanisme d'articulation (32).

12. Procédé selon l'une quelconque des revendications 9 à 11, dans lequel,
- dans le cadre du mouvement alternatif de va-et-vient, ledit au moins un mécanisme de pliage (45) est déplacé par un guide linéaire dans la direction horizontale de sa position de fonctionnement (BP) dans sa position d'attente (WP) et de sa position d'attente (WP) dans sa position de fonctionnement (BP), et/ou dans lequel
- dans le cadre du mouvement alternatif de va-et-vient, le moyen de transport (2) est déplacé par un guide linéaire dans la direction horizontale de sa position de fonctionnement (BP) dans sa position d'attente (WP) et de sa position d'attente (WP) dans sa position de fonctionnement (BP).

13. Procédé selon l'une quelconque des revendications 9 à 12, dans lequel,
- le moyen de transport (2) dudit au moins un module de transport (20) est pivoté dans sa position de fonctionnement (BP) par le biais d'un axe de rotation qui est formé de préférence par un mécanisme d'articulation (22), et est repivoté de sa position de fonctionnement (BP) dans sa position d'attente (WP) par le biais dudit axe de rotation formé de préférence par un mécanisme d'articulation (22), et/ou dans lequel procédé (100)
- ledit au moins un mécanisme de pliage (45) est pivoté dans sa position de fonctionnement (BP) par le biais d'un mécanisme d'articulation (32), et est repivoté de sa position de fonctionnement (BP) dans sa position d'attente (WP) par le biais dudit mécanisme d'articulation (32).

14. Procédé selon l'une quelconque des revendications 9 à 13, dans lequel,
- dans le cadre du mouvement alternatif de va-et-vient, ledit au moins un mécanisme de pliage (45) est déplacé par un guide linéaire dans la direction horizontale de sa position de fonctionnement (BP) dans sa position d'attente (WP) et de sa position d'attente (WP) dans sa position de fonctionnement (BP), et/ou dans lequel
- dans le cadre du mouvement alternatif de va-et-vient, le moyen de transport (2) est déplacé par un guide linéaire dans la direction horizontale de sa position de fonctionnement (BP) dans sa position d'attente (WP) et de sa position d'attente (WP) dans sa position de fonctionnement (BP).

15. Procédé selon l'une quelconque des revendications 9 à 14, dans lequel au moins un mécanisme de fermeture (60) destiné à plier des rabats supérieurs est prévu, lesquels rabats supérieurs sont formés par les emballages du premier type d'emballage, et dans lequel il est prévu que ledit au moins un mécanisme de fermeture (60) est animé d'un mouvement alternatif de va-et-vient entre une position de fonctionnement (BP) et une position d'attente (WP) de sorte que ledit au moins un mécanisme de fermeture (60) et ledit au moins un mécanisme de pliage (45) occupent en même temps leur position de fonctionnement (BP) respective et occupent en même temps leur position d'attente (WP) respective, et dans lequel procédé est prévu que
- le mouvement alternatif de va-et-vient pour ledit au moins un mécanisme de fermeture (60) est effectué de telle sorte que ledit au moins un mécanisme de fermeture (60) se trouve exclusivement au-dessus du moyen de transport (2) et exclusivement au-dessus dudit au moins un mécanisme de pliage (45) pendant et après avoir terminé un mouvement alternatif.
